(19) Europäisches Patentamt
European Patent Office
Office européen des brevets

(11) EP 4 328 255 A1

(12) **EUROPEAN PATENT APPLICATION**
published in accordance with Art. 153(4) EPC

(43) Date of publication:
**28.02.2024 Bulletin 2024/09**

(21) Application number: **22791767.1**

(22) Date of filing: **20.04.2022**

(51) International Patent Classification (IPC):
***C08G 64/00*** ***(2006.01)*** ***D06N 3/14*** ***(2006.01)***
***C08G 18/44*** ***(2006.01)*** ***C08G 63/64*** ***(2006.01)***

(52) Cooperative Patent Classification (CPC):
**C08G 18/44; C08G 63/64; C08G 64/00; D06N 3/14**

(86) International application number:
**PCT/JP2022/018339**

(87) International publication number:
**WO 2022/224996 (27.10.2022 Gazette 2022/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.04.2021 JP 2021072116**

(71) Applicant: **Asahi Kasei Kabushiki Kaisha**
**Tokyo 1000006 (JP)**

(72) Inventors:
- **HOSHINO, Eriko**
  **Tokyo 100-0006 (JP)**
- **KAWAI, Yasufumi**
  **Tokyo 100-0006 (JP)**

(74) Representative: **Strehl Schübel-Hopf & Partner**
**Maximilianstrasse 54**
**80538 München (DE)**

# (54) POLYCARBONATE DIOL COMPOSITION

(57) A polycarbonate diol composition comprising a repeating structural unit represented by the following general formula (I), further comprising at least one repeating structural unit selected from the group consisting of repeating structural units represented by the following general formulas (II) to (IV), and satisfying specific conditions.

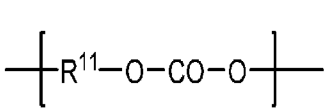
・・・(I)

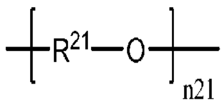
・・・(II)

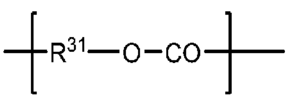
・・・(III)

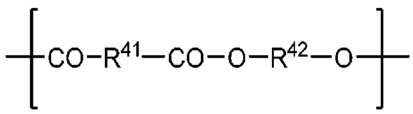
・・・(IV)

EP 4 328 255 A1

## Description

### Technical Field

The present invention relates to a polycarbonate diol composition.

### Background Art

Polyurethane resins have heretofore been used in a wide range of fields such as synthetic leather, artificial leather, adhesives, coating materials for furniture, and coating materials for automobiles. Of starting materials of the polyurethane resins, polyether, polyester, and polycarbonate are used as polyol components to be reacted with isocyanate. However, in recent years, there has been a growing demand for the resistance, such as heat resistance, weather resistance, hydrolysis resistance, solvent resistance, sunscreen resistance, or scratch resistance, of polyurethane resins.

According to Non Patent Document 1, in general, polyether polyol as a polyol component has low viscosity. Hence, polyurethane obtained using polyether polyol is reportedly excellent in flexibility and hydrolysis resistance but inferior in heat resistance or weather resistance. Polyurethane obtained using polyester polyol is inferior in hydrolysis resistance, though heat resistance and weather resistance are improved. By contrast, polyurethane obtained using polycarbonate polyol has the best tough grade in terms of durability such as heat resistance, chemical resistance, and hydrolysis resistance but has a high viscosity and is susceptible to improvement in handleability.

Various considerations on introduction of an ether bond or an ester bond into polycarbonate polyol have been proposed in order to solve the above problem. For example, Patent Document 1 describes a production method for synthesizing a copolymerized polycarbonate diol by subjecting a polycarbonate diol to transesterification reaction, and Patent Document 2 describes a polyester polyol having a specific structure. Patent Document 3 discloses a coating material composition in which a specific polycarbonate diol composition is used.

### List of Prior Art Documents

#### Patent Document

Patent Document 1: Japanese Patent Laid-Open No. 3-252420
Patent Document 2: Japanese Patent Laid-Open No. 2019-151813
Patent Document 3: International Publication No. WO 2019/131617

#### Non Patent Document

Non Patent Document 1: "Case Studies of Polyurethane Material Selection, Structure Control and Modification" published by Technical Information Institute Co., Ltd., 1st edition issued in December 2014, pp. 51-62

### Summary of Invention

#### Problems to be Solved by Invention

However, the techniques described in Patent Documents 1 and 2 are susceptible to improvement in the color tone of the copolymerized polycarbonate diol, leaving an issue in compatibility with other polyols and solvents. The technique described in Patent Document 3 confirms the progress and completion of the reaction with GPC measurement in the method for producing a polycarbonate diol composition but is susceptible to further improvement in the stability of quality.

Accordingly, the present invention has been made in light of the situation described above, and an object of the present invention is to provide a polycarbonate diol composition that has excellent stability of quality, is less colored, and has excellent compatibility with other polyols and solvents.

#### Means for Solving Problems

The present inventors have conducted diligent studies and have found that a polycarbonate diol composition having a specific structure can solve the above problems by satisfying specific conditions, and thus, the present invention has been accomplished.

Specifically, the gist of the present invention resides in the followings.

[1] A polycarbonate diol composition comprising a repeating structural unit represented by the following general formula (I), further comprising at least one repeating structural unit selected from the group consisting of a repeating structural unit represented by the following general formula (II), a repeating structural unit represented by the following general formula (III), and a repeating structural unit represented by the following general formula (IV), and satisfying the following expression (Expression 1):

$$-\!\left[R^{11}-O-CO-O\right]\!- \quad \ldots (I)$$

wherein $R^{11}$ is a divalent linear, branched or cyclic aliphatic, or aromatic hydrocarbon group having 2 or more and 15 or less carbon atoms, the hydrocarbon group optionally having a hetero atom, and $R^{11}$ when present in plural are the same as or different from each other,

$$-\!\left[R^{21}-O\right]_{n21}\!- \quad \ldots (II)$$

wherein $R^{21}$ is a divalent linear, branched or cyclic aliphatic, or aromatic hydrocarbon group having 2 or more and 20 or less carbon atoms, and $R^{21}$ when present in plural are the same as or different from each other; and n21 is any integer,

$$-\!\left[R^{31}-O-CO\right]\!- \quad \ldots (III)$$

wherein $R^{31}$ is a divalent linear, branched or cyclic aliphatic, or aromatic hydrocarbon group having 2 or more and 20 or less carbon atoms, and $R^{31}$ when present in plural are the same as or different from each other,

$$-\!\left[CO-R^{41}-CO-O-R^{42}-O\right]\!- \quad \ldots (IV)$$

wherein $R^{41}$ and $R^{42}$ are each independently a divalent linear, branched or cyclic aliphatic, or aromatic hydrocarbon group having 2 or more and 20 or less carbon atoms, and $R^{41}$ and $R^{42}$ when present in plural are the same as or different from each other,

$$xy \geq 3.7 \times \alpha \ (\alpha = 22.4 \times Mn^{-0.41}) \ \ldots \text{(Expression 1)}$$

wherein x is a proportion of the content (% by mass) of the repeating structural unit represented by the general formula (I) based on the total mass (% by mass) of the repeating structural units represented by the general formulas (I) to (IV), y is an amount of the polycarbonate diol composition titrated (mL) in a cloud point titration method, and Mn is a number-average molecular weight of the polycarbonate diol composition.

[2] A polycarbonate diol composition comprising a repeating structural unit represented by the following general formula (I) and further comprising at least one repeating structural unit selected from the group consisting of a repeating structural unit represented by the following general formula (II), a repeating structural unit represented by the following general formula (III), and a repeating structural unit represented by the following general formula (IV), wherein based on the total mass of the repeating structural units represented by the general formulas (I) to (IV), a content of the repeating structural unit represented by the general formula (I) is 40% by mass or more, and an amount titrated in a cloud point titration method is 4.0 mL or more and 9.5 mL or less:

$$-\!\!\left[ R^{11}-O-CO-O \right]\!\!- \quad \text{... (I)}$$

wherein $R^{11}$ is a divalent linear, branched or cyclic aliphatic, or aromatic hydrocarbon group having 2 or more and 15 or less carbon atoms, the hydrocarbon group optionally having a hetero atom, and $R^{11}$ when present in plural are the same as or different from each other,

$$-\!\!\left[ R^{21}-O \right]_{n21}\!\!- \quad \text{... (II)}$$

wherein $R^{21}$ is a divalent linear, branched or cyclic aliphatic, or aromatic hydrocarbon group having 2 or more and 20 or less carbon atoms, and $R^{21}$ when present in plural are the same as or different from each other; and n21 is any integer,

$$-\!\!\left[ R^{31}-O-CO \right]\!\!- \quad \text{... (III)}$$

wherein $R^{31}$ is a divalent linear, branched or cyclic aliphatic, or aromatic hydrocarbon group having 2 or more and 20 or less carbon atoms, and $R^{31}$ when present in plural are the same as or different from each other,

$$-\!\!\left[ CO-R^{41}-CO-O-R^{42}-O \right]\!\!- \quad \text{... (IV)}$$

wherein $R^{41}$ and $R^{42}$ are each independently a divalent linear, branched or cyclic aliphatic, or aromatic hydrocarbon group having 2 or more and 20 or less carbon atoms, and $R^{41}$ and $R^{42}$ when present in plural are the same as or different from each other,

[3] The polycarbonate diol composition according to [1], wherein based on the total mass of the repeating structural units represented by the general formulas (I) to (IV), a content of the repeating structural unit represented by the general formula (I) is 5% by mass or more and 95% by mass or less.

[4] The polycarbonate diol composition according to any of [1] to [3], wherein based on the total mass of the repeating structural units represented by the general formulas (I) to (IV), a content of the repeating structural unit represented by the general formula (I) is 40% by mass or more and 90% by mass or less.

[5] The polycarbonate diol composition according to any of [1] to [4], wherein an acid value is 0.001 mg-KOH/g or more and 0.8 mg-KOH/g or less.

[6] The polycarbonate diol composition according to any of [1] to [5], wherein a peroxide content is 10 meq/kg or less.

[7] The polycarbonate diol composition according to any of [1] to [6], wherein a Hazen color number value (APHA value) in accordance with JIS K0071-1 (2017) is 100 or less.

[8] The polycarbonate diol composition according to any of [1] to [7], wherein among the repeating structural units represented by the general formulas (II) to (IV), an average value of the number of repeats of the repeating structural unit represented by the general formula (II), represented by n21, is 15 or larger.

[9] The polycarbonate diol composition according to any of [1] to [8], comprising at least a repeating structural unit represented by the general formula (II) or (IV) among the repeating structural unis represented by the general formulas (II) to (IV).

[10] The polycarbonate diol composition according to any of [1] to [9], comprising at least a repeating structural unit represented by the general formula (II) among the repeating structural unis represented by the general formulas (II) to (IV).

[11] A polyurethane prepared using the polycarbonate diol composition according to any of [1] to [10].

[12] The polyurethane according to [11], wherein, with respect to a stress at 100% stretch according to a tensile test of the polyurethane, $\Delta M$ calculated by the following expression (B) is 1.0 or more and 19.0 or less:

$$\Delta M = M1 - M2 \quad ... \quad (B)$$

wherein M1 represents a stress at 100% stretch in a tensile test under a -20°C condition, and M2 represents a stress at 100% stretch in a tensile test under a 23°C condition.

[13] A synthetic leather comprising the polyurethane according to [11] or [12].

Advantages of Invention

The polycarbonate diol composition of the present invention has excellent stability of quality, is less colored, and has excellent compatibility with solvents and other polyols.

Mode for Carrying Out Invention

Hereinafter, the mode for carrying out the present invention (hereinafter, referred to as the "present embodiment") will be described in detail. The present invention is not limited by the description below and can be carried out with various modification or changes made therein without departing from the spirit of the present invention.

[Polycarbonate diol composition]

A first polycarbonate diol composition of the present embodiment comprises a repeating structural unit represented by the following general formula (I) (hereinafter, simply also referred to as "structural unit (I)"), further comprises at least one repeating structural unit selected from the group consisting of a repeating structural unit represented by the following general formula (II) (hereinafter, simply also referred to as "structural unit (II)"), a repeating structural unit represented by the following general formula (III) (hereinafter, simply also referred to as "structural unit (III)"), and a repeating structural unit represented by the following general formula (IV) (hereinafter, simply also referred to as "structural unit (IV)"), and satisfies the following expression (Expression 1):

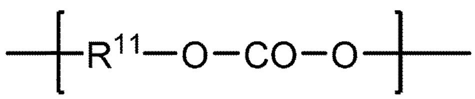

... (I)

wherein $R^{11}$ is a divalent linear, branched or cyclic aliphatic, or aromatic hydrocarbon group having 2 or more and 15 or less carbon atoms, the hydrocarbon group optionally having a hetero atom, and $R^{11}$ when present in plural are the same as or different from each other,

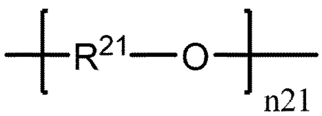

... (II)

wherein $R^{21}$ is a divalent linear, branched or cyclic aliphatic, or aromatic hydrocarbon group having 2 or more and 20 or less carbon atoms, and $R^{21}$ when present in plural are the same as or different from each other; and n21 is any integer,

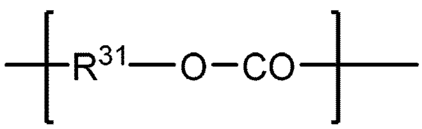

... (III)

wherein $R^{31}$ is a divalent linear, branched or cyclic aliphatic, or aromatic hydrocarbon group having 2 or more and 20 or less carbon atoms, and $R^{31}$ when present in plural are the same as or different from each other,

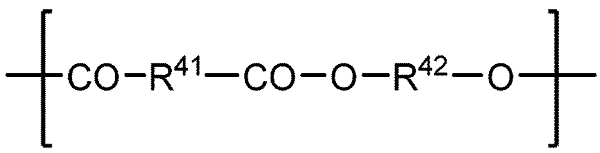

... (IV)

wherein $R^{41}$ and $R^{42}$ are each independently a divalent linear, branched or cyclic aliphatic, or aromatic hydrocarbon group having 2 or more and 20 or less carbon atoms, and $R^{41}$ and $R^{42}$ when present in plural are the same as or different from each other,

$$xy \geq 3.7 \times \alpha \ (\alpha = 22.4 \times Mn^{-0.41}) \ \ldots \ \text{(Expression 1)}$$

wherein x is the proportion of the content (% by mass) of the repeating structural unit represented by the general formula (I) based on the total mass (% by mass) of the repeating structural units represented by the general formulas (I) to (IV), y is the amount of the polycarbonate diol composition titrated (mL) in a cloud point titration method, and Mn is the number-average molecular weight of the polycarbonate diol composition.

As having these characteristics, the polycarbonate diol composition of the present embodiment has excellent stability of quality and excellent compatibility with solvents and other polyols.

A second polycarbonate diol composition of the present embodiment comprises a repeating structural unit represented by the following general formula (I) (hereinafter, simply also referred to as "structural unit (I)") and further comprises at least one repeating structural unit selected from the group consisting of a repeating structural unit represented by the following general formula (II) (hereinafter, simply also referred to as "structural unit (II)"), a repeating structural unit represented by the following general formula (III) (hereinafter, simply also referred to as "structural unit (III)"), and a repeating structural unit represented by the following general formula (IV) (hereinafter, simply also referred to as "structural unit (IV)"), in which composition the content of repeating structural unit represented by the general formula (I) is 40% by mass or more based on the total mass of the repeating structural units represented by the general formulas (I) to (IV), and the amount titrated in a cloud point titration method is 4.0 mL or more and 9.5 mL or less:

$$-\!\!\left[R^{11}-O-CO-O\right]\!\!- \quad \ldots \text{(I)}$$

wherein $R^{11}$ is a divalent linear, branched or cyclic aliphatic, or aromatic hydrocarbon group having 2 or more and 15 or less carbon atoms, the hydrocarbon group optionally having a hetero atom, and $R^{11}$ when present in plural are the same as or different from each other,

$$-\!\!\left[R^{21}-O\right]_{n21}\!\!- \quad \ldots \text{(II)}$$

wherein $R^{21}$ is a divalent linear, branched or cyclic aliphatic, or aromatic hydrocarbon group having 2 or more and 20 or less carbon atoms, and $R^{21}$ when present in plural are the same as or different from each other; and n21 is any integer,

$$-\!\!\left[R^{31}-O-CO\right]\!\!- \quad \ldots \text{(III)}$$

wherein $R^{31}$ is a divalent linear, branched or cyclic aliphatic, or aromatic hydrocarbon group having 2 or more and 20 or less carbon atoms, and $R^{31}$ when present in plural are the same as or different from each other,

$$-\!\!\left[CO-R^{41}-CO-O-R^{42}-O\right]\!\!- \quad \ldots \text{(IV)}$$

wherein $R^{41}$ and $R^{42}$ are each independently a divalent linear, branched or cyclic aliphatic, or aromatic hydrocarbon group having 2 or more and 20 or less carbon atoms, and $R^{41}$ and $R^{42}$ when present in plural are the same as or different from each other.

As having these characteristics, the polycarbonate diol composition of the present embodiment has excellent

compatibility with solvents and other polyols.

The method for producing the polycarbonate diol composition of the present embodiment is not particularly limited. The composition may be a copolymer of the structural unit (I) and at least one structural unit of the structural units (II) to (IV), or each may be independently present.

[Structural unit (I)]

In the polycarbonate diol composition of the present embodiment, the structural unit (I) will be described in detail hereinafter.

($R^{11}$)

In the general formula (I), $R^{11}$ is a divalent linear, branched or cyclic aliphatic, or aromatic hydrocarbon group having 2 or more and 15 or less carbon atoms, the hydrocarbon group optionally having a hetero atom. $R^{11}$ when present in plural are the same as or different from each other.

The divalent linear aliphatic hydrocarbon group represented by $R^{11}$ has 2 or more and 15 or less, preferably 3 or more and 12 or less, more preferably 3 or more and 10 or less carbon atoms.

Specific examples of the divalent linear aliphatic hydrocarbon group represented by $R^{11}$ include, but are not particularly limited to, an ethylene group, a trimethylene group, a tetramethylene group, a pentamethylene group, a hexamethylene group, a heptylene group, and an octylene group. A trimethylene group, a butylene group, a pentylene group, a hexylene group, or a decamethylene group is preferred from the viewpoint of versatility.

The divalent branched aliphatic hydrocarbon group represented by $R^{11}$ has 3 or more and 15 or less, preferably 3 or more and 12 or less, more preferably 3 or more and 10 or less carbon atoms.

Specific examples of the divalent branched aliphatic hydrocarbon group represented by $R^{11}$ include, but are not particularly limited to, an isopropylene group, an isobutylene group, a tert-butylene group, an isopentylene group, a 2,2-dimethyltrimethylene group, an isohexylene group, an isoheptylene group, and an isooctylene group. Among others, an isobutylene group, an isopentylene group, or an isohexylene group is preferred from the viewpoint of versatility.

The divalent cyclic aliphatic hydrocarbon group represented by $R^{11}$ has 3 or more and 15 or less, preferably 6 or more and 15 or less, more preferably 6 or more and 10 or less carbon atoms.

Specific examples of the divalent cyclic aliphatic hydrocarbon group represented by $R^{11}$ include, but are not particularly limited to, a cyclobutylene group, a cyclopentylene group, a cyclohexylene group, and a cycloheptylene group. Among others, a cyclohexylene group is preferred from the viewpoint of versatility.

The divalent aromatic hydrocarbon group represented by $R^{11}$ has 6 or more and 15 or less, preferably 6 or more and 12 or less, more preferably 6 or more and 10 or less carbon atoms.

Specific examples of the divalent aromatic hydrocarbon group represented by $R^{11}$ include, but are not particularly limited to, a phenylene group and a naphthylene group.

Specific examples of the hetero atom in $R^{11}$ include, but are not particularly limited to, boron, oxygen, nitrogen, phosphorus, and sulfur. A five-membered heterocyclic structure such as oxolane, thiolane, or azolidine, or a six-membered heterocyclic structure such as oxane or pyridine may be included.

Among others, $R^{11}$ is preferably a divalent linear aliphatic hydrocarbon group having 3 or more and 10 or less carbon atoms or a divalent branched aliphatic hydrocarbon group having 3 or more and 10 or less carbon atoms, more preferably a divalent linear aliphatic hydrocarbon group having 4 or more and 6 or less carbon atoms, still more preferably a butylene group, a pentylene group and a hexylene group as a divalent linear aliphatic hydrocarbon group.

In the polycarbonate diol composition of the present embodiment, at least a portion of the polycarbonate diol preferably has a structure of the general formula (I) wherein $R^{11}$ is at least two or more selected from the group consisting of divalent linear and branched aliphatic hydrocarbon groups having 2 or more and 15 or less carbon atoms. In this case, a polycarbonate diol composition that is liquid at ordinary temperature tends to be obtained.

When a molecule having the structural unit represented by the general formula (I) is included in the polycarbonate diol composition of the present embodiment, the molecule preferably has hydroxy groups at both ends.

The molecule having the polycarbonate structure contained in the polycarbonate diol composition of the present embodiment preferably has hydroxy groups at both ends thereof. Specifically, the molecule having the polycarbonate structure contained in the polycarbonate diol composition of the present embodiment is preferably polycarbonate diol. A portion of the terminal hydroxy groups may be converted to an alkyl group, an aryl group or the like unreactive with an isocyanate group due to impurities in various starting materials for use in the production of the polycarbonate diol composition, a terminal structure that is secondarily produced during the production of the polycarbonate diol composition, etc., or in order to control a urethanization reaction rate or state for the purpose of using the polycarbonate diol composition. In the present embodiment, in consideration of such a case, the terminal groups of the polycarbonate diol also encompass the case where 100% by mol of groups at both ends is not strictly a hydroxy group. From such a viewpoint, the ratio of

the hydroxy groups to the total molar quantity of terminal groups is preferably 90% by mol or more, more preferably 95% by mol or more, further preferably 98% by mol or more.

In the present embodiment, the structures at both ends of the polycarbonate diol contained in the polycarbonate diol composition can be confirmed in accordance with, for example, a method for measuring a primary terminal OH ratio, described in Japanese Patent No. 3874664 (Reference 1). Ethanol as well as a solvent such as tetrahydrofuran, acetone, or methanol can be used as a solvent recovering fractions.

[Structural unit (II)]

Hereinafter, the structural unit (II) will be described in detail.

($R^{21}$)

In the general formula (II), $R^{21}$ is a divalent linear, branched or cyclic aliphatic, or aromatic hydrocarbon group having 2 or more and 20 or less carbon atoms. $R^{21}$ when present in plural are the same as or different from each other.

The divalent linear aliphatic hydrocarbon group represented by $R^{21}$ has 2 or more and 20 or less, preferably 2 or more and 12 or less, more preferably 2 or more and 6 or less carbon atoms.

Specific examples of the divalent linear aliphatic hydrocarbon group represented by $R^{21}$ include, but are not particularly limited to, an ethylene group, a trimethylene group, a tetramethylene group, a pentamethylene group, a hexamethylene group, a heptylene group, and an octylene group.

The divalent branched aliphatic hydrocarbon group represented by $R^{21}$ has 3 or more and 20 or less, preferably 3 or more and 12 or less, more preferably 3 or more and 6 or less carbon atoms.

Specific examples of the divalent branched aliphatic hydrocarbon group represented by $R^{21}$ include, but are not particularly limited to, an isopropylene group, an isobutylene group, a tert-butylene group, an isopentylene group, a 2,2-dimethyltrimethylene group, an isohexylene group, an isoheptylene group, and an isooctylene group.

The divalent cyclic aliphatic hydrocarbon group represented by $R^{21}$ has 6 or more and 20 or less, preferably 6 or more and 12 or less, more preferably 6 or more and 8 or less carbon atoms.

Specific examples of the divalent cyclic aliphatic hydrocarbon group represented by $R^{21}$ include, but are not particularly limited to, a cyclobutylene group, a cyclopentylene group, a cyclohexylene group, and a cycloheptylene group.

The divalent aromatic hydrocarbon group represented by $R^{21}$ has 6 or more and 15 or less, preferably 6 or more and 12 or less, more preferably 6 or more and 10 or less carbon atoms.

Specific examples of the divalent aromatic hydrocarbon group represented by $R^{21}$ include, but are not particularly limited to, a phenylene group and a naphthylene group.

Among others, $R^{21}$ is preferably a divalent linear, branched or cyclic aliphatic hydrocarbon group having 2 or more and 20 or less carbon atoms (i.e., an alkylene group), more preferably a divalent linear aliphatic hydrocarbon group having 2 or more and 6 or less carbon atoms, and/or a divalent branched aliphatic hydrocarbon group having 3 or more and 6 or less carbon atoms.

(n21)

In the general formula (II), n21 represents the number of repeats of the structure ($-R^{21}-O-$). In the general formula (II), n21 is any integer, and the average value of n21 in the whole polycarbonate diol composition of the present embodiment is preferably 12 or larger, more preferably in the range of 12 or larger and 70 or smaller, further preferably in the range of 12 or larger and 60 or smaller, further preferably 15 or larger, particularly preferably in the range of 15 or larger and 50 or smaller.

When the average value of n21 in the whole polycarbonate diol composition of the present embodiment is equal to or larger than the lower limit value described above, polyurethane much superior in flexibility and low-temperature flexibility tends to be obtained. When the average value of n21 in the whole polycarbonate diol composition of the present embodiment is equal to or smaller than the upper limit value described above, the polycarbonate diol composition tends to have lower viscosity.

n21 described above can be determined by isolating the starting material diol component through the alkali decomposition of the polycarbonate diol composition, and subjecting the component to GC-MS measurement, LC-MS measurement and gel permeation chromatography (GPC) measurement. Specifically, n21 can be determined by a method described in Examples mentioned later.

Among others, the structural unit (II) is preferably a polyoxyalkylene structure.

Specific examples of the preferred oxyalkylene group contained in the structural unit (II) include, but are not particularly limited to, an oxyethylene group, an oxy-1-methylethylene group, an oxytetramethylene group, and an oxy-2,2-dimethyltrimethylene group. Among others, a structure containing an oxy-1-methylethylene group is preferred, and

an oxy-1-methylethylene group and an oxyethylene group are particularly preferred.

[Structural unit (III)]

Hereinafter, the structural unit (III) will be described in detail.

($R^{31}$)

In the general formula (III), $R^{31}$ is a divalent linear, branched or cyclic aliphatic, or aromatic hydrocarbon group having 2 or more and 20 or less carbon atoms. $R^{31}$ when present in plural are the same as or different from each other.

Examples of $R^{31}$ in the general formula (III) include, but are not particularly limited to, a linear or branched alkylene group having 2 to 20 carbon atoms. Specific examples include, but are not particularly limited to, an ethylene group, a trimethylene group, a tetramethylene group, a pentamethylene group, a hexamethylene group, a heptamethylene group, an octamethylene group, a nonamethylene group, a propylene group, an isobutylene group, a 2-methyltetramethylene group, a 2-methylpentamethylene group, a 3-methylpentamethylene group, an isononamethylene group, and a 2-methylnonamethylene group. Examples of $R^{31}$ in the general formula (III) also include, but are not particularly limited to, a substituted or unsubstituted cycloalkylene having 3 to 20 carbon atoms. Specific examples include, but are not particularly limited to, a cyclopentylene group, a cyclohexylene group, a 1,2-dimethylenecyclopentane group, a 1,3-dimethylenecyclopentane group, a 1,2-dimethylenecyclohexane group, a 1,3-dimethylenecyclohexane group, a 1,4-dimethylenecyclohexane group, a 4,4'-methylenedicyclohexylene group, and a 2,2-dicyclohexylenepropane group. Examples of $R^{31}$ in the general formula (III) also include, but are not particularly limited to, a substituted or unsubstituted arylene group having 6 to 20 carbon atoms. Specific examples include, but are not particularly limited to, a phenylene group, a 1,2-dimethylenebenzene group, a 1,3-dimethylenebenzene group, a 1,4-dimethylenebenzene group, a naphthylene group, a 4,4'-methylenediphenylene group, and a 2,2-diphenylenepropane group.

Among these, $R^{31}$ is preferably a pentamethylene group. from the viewpoints of improvement in contamination resistance and solvent resistance when the composition is made into polyurethane and availability of a cyclic ester compound as a starting material.

[Structural unit (IV)]

Hereinafter, the structural unit (IV) will be described in detail.

($R^{41}$)

In the general formula (IV), $R^{41}$'s are each independently a divalent linear, branched or cyclic aliphatic, or aromatic hydrocarbon group having 2 or more and 20 or less carbon atoms. $R^{41}$ when present in plural are the same as or different from each other.

Examples of $R^{41}$ in the general formula (IV) include, but are not particularly limited to, a linear or branched alkylene group having 2 to 20 carbon atoms. Specific examples include, but are not particularly limited to, an ethylene group, a trimethylene group, a tetramethylene group, a pentamethylene group, a hexamethylene group, a heptamethylene group, an octamethylene group, a nonamethylene group, a propylene group, an isobutylene group, a 2-methyltetramethylene group, a 2-methylpentamethylene group, a 3-methylpentamethylene group, an isononamethylene group, and a 2-methylnonamethylene group. Examples of $R^{41}$ in the general formula (IV) also include, but are not particularly limited to, a substituted or unsubstituted cycloalkylene having 3 to 20 carbon atoms. Specific examples include, but are not particularly limited to, a cyclopentylene group, a cyclohexylene group, a 1,2-dimethylenecyclopentane group, a 1,3-dimethylenecyclopentane group, a 1,2-dimethylenecyclohexane group, a 1,3-dimethylenecyclohexane group, a 1,4-dimethylenecyclohexane group, a 4,4'-methylenedicyclohexylene group, and a 2,2-dicyclohexylenepropane group. Examples of $R^{41}$ in the general formula (IV) also include, but are not particularly limited to, a substituted or unsubstituted arylene group having 6 to 20 carbon atoms. Specific examples include, but are not particularly limited to, a phenylene group, a 1,2-dimethylenebenzene group, a 1,3-dimethylenebenzene group, a 1,4-dimethylenebenzene group, a naphthylene group, a 4,4'-methylenediphenylene group, and a 2,2-diphenylenepropane group.

($R^{42}$)

In the general formula (IV), $R^{42}$ is a divalent linear, branched or cyclic aliphatic, or aromatic hydrocarbon group having 2 or more and 20 or less carbon atoms. $R^{42}$ when present in plural are the same as or different from each other.

Examples of $R^{42}$ in the general formula (IV) include, but are not particularly limited to, a linear or branched alkylene group having 2 to 20 carbon atoms. Specific examples include, but are not particularly limited to, an ethylene

group, a trimethylene group, a tetramethylene group, a pentamethylene group, a hexamethylene group, a heptamethylene group, an octamethylene group, a nonamethylene group, a propylene group, an isobutylene group, a 2-methyltetramethylene group, a 2-methylpentamethylene group, a 3-methylpentamethylene group, an isononamethylene group, and a 2-methylnonamethylene group. Examples of $R^{42}$ in the general formula (IV) also include, but are not particularly limited to, a substituted or unsubstituted cycloalkylene group having 3 to 20 carbon atoms. Specific examples include, but are not particularly limited to, a cyclopentylene group, a cyclohexylene group, a 1,2-dimethylenecyclopentane group, a 1,3-dimethylenecyclopentane group, a 1,2-dimethylenecyclohexane group, a 1,3-dimethylenecyclohexane group, a 1,4-dimethylenecyclohexane group, a 4,4'-methylenedicyclohexylene group, and a 2,2-dicyclohexylenepropane group. Examples of $R^{42}$ in the general formula (IV) also include, but are not particularly limited to, a substituted or unsubstituted arylene group having 6 to 20 carbon atoms. Specific examples include, but are not particularly limited to, a phenylene group, a 1,2-dimethylenebenzene group, a 1,3-dimethylenebenzene group, a 1,4-dimethylenebenzene group, a naphthylene group, a 4,4'-methylenediphenylene group, and a 2,2-diphenylenepropane group.

[Structural unit (II) to structural unit (IV)]

The polycarbonate diol composition of the present embodiment comprises at least one repeating structural unit selected from the group consisting of a repeating structural unit represented by the following general formula (II), a repeating structural unit represented by the following general formula (III), and a repeating structural unit represented by the following general formula (IV):

$$-\!\!\left[ R^{21} - O \right]_{n21}\!\!- \qquad \ldots \text{(II)}$$

wherein $R^{21}$ is a divalent linear, branched or cyclic aliphatic, or aromatic hydrocarbon group having 2 or more and 20 or less carbon atoms, and $R^{21}$ when present in plural are the same as or different from each other; and n21 is any integer,

$$-\!\!\left[ R^{31} - O - CO \right]\!\!- \qquad \ldots \text{(III)}$$

wherein $R^{31}$ is a divalent linear, branched or cyclic aliphatic, or aromatic hydrocarbon group having 2 or more and 20 or less carbon atoms, and $R^{31}$ when present in plural are the same as or different from each other,

$$-\!\!\left[ CO - R^{41} - CO - O - R^{42} - O \right]\!\!- \qquad \ldots \text{(IV)}$$

wherein $R^{41}$ and $R^{42}$ are each independently a divalent linear, branched or cyclic aliphatic, or aromatic hydrocarbon group having 2 or more and 20 or less carbon atoms, and $R^{41}$ and $R^{42}$ when present in plural are the same as or different from each other.

In the polycarbonate diol composition of the present embodiment, the terminal structure of the structural units (II) to (IV) may be a terminal structure where one of the ends is bonded to a carbonate group, and the other end is bonded to a hydroxy group, a terminal structure where both ends are bonded to carbonate groups, or a terminal structure where both ends are bonded to hydroxy groups.

In the polycarbonate diol composition of the present embodiment, the terminal structure of the structural units (II) to (IV) may be a mixture of a terminal structure where one of the ends is bonded to a carbonate group, and the other end is bonded to a hydroxy group, a terminal structure where both ends are bonded to carbonate groups, and a terminal structure where both ends are bonded to hydroxy groups.

Among these, the polycarbonate diol composition of the present embodiment preferably comprises the structural unit (II) or (IV), more preferably the structural unit (II) among the structural units (II) to (IV), from the viewpoint of flexibility, low-temperature characteristics, and moist heat resistance.

[Cloud point titration]

The amount titrated of the second polycarbonate diol composition of the present embodiment in a cloud point titration method is 4.0 mL or more and 9.5 mL or less, preferably 4.0 mL or more and 8.5 mL or less.

In the present embodiment, the amount titrated in a cloud point titration is obtained by dissolving the polycarbonate diol composition in butyl acetate, which is a good solvent, titrating the resulting solution with hexane, which is a poor solvent, and determining the amount titrated when the solution began to be cloudy. When insoluble in butyl acetate, the composition may be dissolved in acetone. Specifically, the amount titrated can be determined by a method described in Examples mentioned later.

In this cloud point titration, the solubility in a solvent is evaluated, and differences appear depending on the type, molecular weight, and structure of the polyol. Generally, the smaller the molecular weight, the higher the solubility in a solvent. The solubility differs depending on the functional group contained. Accordingly, as for polyols, a case in which two or more polyols are blended and a case in which two or more polyols are reacted to thereby result in a change in the structure are different in the solubility.

The amount titrated of the second polycarbonate diol composition of the present embodiment in a cloud point titration method is 4.0 mL or more and 9.5 mL or less, preferably 4.0 mL or more and 8.5 mL or less, more preferably 4.0 mL or more and 7.6 mL or less, further preferably 4.1 mL or more and 7.4 mL or less.

When the amount titrated in the cloud point titration method is equal to or larger than the lower limit value described above, the compatibility of the polycarbonate diol composition with the solvent and the starting materials in synthesizing a polyurethane is improved, and when the amount titrated in the cloud point titration method is equal to or smaller than the upper limit value described above, obtained is a polyurethane having an excellent balance of low-temperature flexibility and durability such as chemical resistance and moist heat resistance, which is preferred.

In the polycarbonate diol composition, a method for controlling the amount titrated in the cloud point titration method in the range is not particularly limited. Examples thereof include a method of adjusting the feed ratio of the structural unit (I) and the structural units (II) to (IV) and also include a method of adjusting the reaction time and a method of appropriately adjusting the oxygen concentration at the time of mixing and stirring, in the method for producing a polycarbonate diol for use in the present embodiment mentioned later.

When this cloud point titration method is used, the progress of the transesterification reaction can be evaluated. Thus, by setting the target value of the amount titrated in the cloud point titration method, variations in the transesterification reaction among production lots are reduced, and a polycarbonate diol composition having excellent stability of quality tends to be obtained.

[Relational expression (Expression 1)]

The first polycarbonate diol composition of the present embodiment satisfies the following expression (Expression 1):

$$xy \geq 3.7 \times \alpha \ (\alpha = 22.4 \times Mn^{-0.41}) \ \ldots \text{(Expression 1)}$$

wherein x is the content (% by mass) of the repeating structural unit represented by the general formula (I) based on the total mass (% by mass) of the repeating structural units represented by the general formulas (I) to (IV), y is the amount of the polycarbonate diol composition titrated (mL) in a cloud point titration method, and Mn is a number-average molecular weight of the polycarbonate diol composition.

Here, the number-average molecular weight can be calculated from the hydroxy value of the polycarbonate diol composition by use of a method described in Examples mentioned later.

In cloud point titration, a compound having a smaller molecular weight generally has higher solubility in a solvent, and thus the amount of a poor solvent titrated tends to increase. $\alpha$ is a factor that offsets the difference resulting from the molecular weight.

Polycarbonate diols generally have low solubility in a solvent. Thus when x becomes larger, y tends to be smaller. When the repeating structural units represented by the general formulas (I) to (IV) and the repeating structural unit represented by the general formula (I) are present more randomly, the amount titrated in cloud point titration is presumed to increase. Examples of a method for obtaining a polycarbonate diol composition satisfying the expression described above (Expression 1) include, but are not particularly limited, to a method for appropriately setting the reaction time until modification sufficiently proceeds.

[Content of structural unit (I)]

In the polycarbonate diol composition of the present embodiment, the content of the structural unit (I) is preferably 5% by mass or more and 95% by mass or less, more preferably 20% by mass or more and 90% by mass or less, further preferably 40% by mass or more and 90% by mass or less, based on the total mass of the structural units (I) to (IV). When the content of the structural unit (I) is equal to or more than the lower limit value described above, polyurethane much superior in durability such as chemical resistance and moist heat resistance is obtained, which is preferred. When the content of the structural unit (I) is equal to or lower than the upper limit value described above, the viscosity of the polycarbonate diol composition tends to be reduced. The content of the structural unit (I) can be measured by a method described in Examples mentioned later.

[Number-average molecular weight]

The number-average molecular weight of the polycarbonate diol composition of the present embodiment is preferably 250 or higher and 10000 or lower, more preferably 400 or higher and 8000 or lower, further preferably 500 or higher and 5000 or lower, particularly preferably 500 or higher and 3000 or lower. When the number-average molecular weight of the polycarbonate diol composition of the present embodiment is equal to or lower than the upper limit value described above, the viscosity tends to decrease, and the handleability at the time of polyurethane production tends to increase. When the number-average molecular weight is equal to or higher than the lower limit value described above, the flexibility of polyurethane produced by using the polycarbonate diol composition of the present embodiment tends to be excellent.

Examples of a method for controlling the number-average molecular weight of the polycarbonate diol composition of the present embodiment in the range include, but are not particularly limited to, a method in which a structural unit (I) having a number-average molecular weight controlled in the range and at least one structural unit of the structural unit (II) to structural unit (IV) having a number-average molecular weight controlled in the range are used, a method in which a structural unit (I) having a number-average molecular weight larger than the range and at least one structural unit of the structural unit (II) to structural unit (IV) having a number-average molecular weight smaller than the range, and a method in which a reaction is conducted while the number-average molecular weight is checked and the reaction is stopped when the molecular weight reaches within the range.

In the present embodiment, the number-average molecular weight of the polycarbonate diol composition can be measured by a method described in Examples mentioned later.

[Acid value]

The acid value of the polycarbonate diol composition of the present embodiment is preferably 0.001 mg-KOH/g or more and 0.8 mg-KOH/g or less, more preferably 0.005 mg-KOH/g or more and 0.6 mg-KOH/g or less, further preferably 0.01 mg-KOH/g or more and 0.6 mg-KOH/g or less. It is difficult to remove all the acidic compounds derived from the starting material, catalysts, additives, and the like. Thus, an acid value equal to or more than the lower limit value described above is preferred in terms of the productivity of the polycarbonate diol composition. When the acid value is equal to or less than the upper limit value described above, reduction in occurrence of coloring tends to be enabled.

Examples of a method for controlling the acid value of the polycarbonate diol composition in the range include, but are not particularly limited to, a method of adjusting the starting material acid value at the time of production the polycarbonate diol composition and a method of appropriately selecting catalyst poison addition to deactivate the catalyst.

In the present embodiment, the acid value of the polycarbonate diol composition can be measured by a method described in Examples mentioned later.

[Peroxide value]

The peroxide content of the polycarbonate diol composition of the present embodiment (hereinafter, also referred to as "peroxide value") is preferably 10 meq/kg or less, more preferably 3 meq/kg or less. When the peroxide value of the polycarbonate diol composition of the present embodiment is 10 meq/kg or less, coloring tends to be suppressed. The lower limit of the peroxide value of the polycarbonate diol composition of the present embodiment is not particularly limited and is, for example, 0.01 meq/kg. Examples of a method for measuring the peroxide value include a sodium thiosulfate titration method in which potassium iodide is allowed to act on oxidized oils and fats under acidic conditions and freed iodine is determined by a titration method. The peroxide value can be conveniently measured using, for example, test paper for peroxide value measurement (trade name: "POV test paper", manufactured by Sibata Scientific Technology Ltd.). Specifically, the peroxide value can be measured by a method described in Examples mentioned later.

Examples of a method for controlling the peroxide value of the polycarbonate diol composition in the range

include, but are not particularly limited to, a method of allowing the reaction temperature to be 200°C or lower in order to reduce oxidative cleavage due to pyrolysis, a method of allowing the oxygen concentration to be 0.5% or lower at the time of production of the polycarbonate diol composition, and a method of allowing the nitrogen flow rate at the time of production to be 0.1 L/min or more and 50 L/min or less, and the methods described above may be combined.

[APHA]

The value of the Hazen color number of the polycarbonate diol composition of the present embodiment (hereinafter, also referred to as "APHA") (APHA value: in accordance with JIS K0071-1 (2017)) is preferably 100 or less, more preferably 60 or less, further preferably 50 or less. The lower the APHA value, the better the polycarbonate diol composition itself and also the color tone of polyurethane obtained using this polycarbonate diol composition. The lower limit of the APHA value is not particularly limited and is, for example, 0.

A polycarbonate diol composition satisfying such an APHA value can be produced by allowing the starting material to be used to have an APHA of 100 or less. In the method for producing a polycarbonate diol for use in the present embodiment mentioned later, the effectivity will be better by allowing the oxygen concentration at the time of mixing and stirring to be 0.5% or less.

In the present embodiment, the APHA value can be measured by a method described in Examples mentioned later.

<Method for producing polycarbonate diol composition>

The method for producing a polycarbonate diol composition of the present embodiment is not particularly limited as long as the method satisfies the characteristics described above. Examples of the method include a method in which transesterification reaction is performed using a polycarbonate diol represented by the following general formula (I-1) (hereinafter, also referred to as "polycarbonate diol (I-1)") and at least one selected from the group consisting of an ether diol represented by the following general formula (II-1) (hereinafter, also referred to as "ether diol (II-1)"), a polycaprolactone diol (III-1) represented by the following general formula (III-1) (hereinafter, also referred to as "lactone diol (III-1)"), and a polyester diol represented by the following general formula (IV-1) (hereinafter, also referred to as "ester diol (IV-1)"), and a method in which a polycarbonate diol (I-1) is reacted with a cyclic ester compound:

$$HO\left(R^{111}-O-CO-O\right)_{n11}R^{112}-OH \quad \ldots \text{(I-1)}$$

wherein $R^{111}$ and $R^{112}$ are each the same as $R^{11}$ described above, and n11 is any integer,

$$HO\left(R^{211}-O\right)_{n211}H \quad \ldots \text{(II-1)}$$

wherein $R^{211}$ is the same as $R^{21}$ described above, and n211 is the same as n21 described above,

$$HO\left(R^{311}-O-CO\right)_{n311}H \quad \ldots \text{(III-1)}$$

wherein $R^{311}$ is the same as $R^{31}$ described above, and n311 is any integer,

$$HO\left(CO-R^{411}-CO-O-R^{421}-O\right)_{n411}R^{421}-OH \quad \ldots \text{(IV-1)}$$

wherein $R^{411}$ and $R^{421}$ are the same as $R^{41}$ and $R^{42}$ described above, respectively, and n411 is any integer.

[Polycarbonate diol (I-1)]

The polycarbonate diol (I-1) for use in the production of the polycarbonate diol composition of the present embodiment can be any compound having a structure represented by the general formula (I-1). A method for producing the polycarbonate diol (I-1) is not particularly limited, and a method known in the art may be adopted. The polycarbonate diol (I-1) can be obtained, for example, through the reaction of a carbonate compound with a diol compound in the presence of a transesterification catalyst.

(Carbonate compound)

Examples of the carbonate compound for use in the production of the polycarbonate diol (I-1) include, but are not limited to, alkylene carbonate, dialkyl carbonate, and diaryl carbonate.
Examples of the alkylene carbonate include, but are not particularly limited to, ethylene carbonate, trimethylene carbonate, 1,2-propylene carbonate, 1,2-butylene carbonate, 1,3-butylene carbonate, and 1,2-pentylene carbonate.
Examples of the dialkyl carbonate include, but are not particularly limited to, dimethyl carbonate, diethyl carbonate, dipropyl carbonate, and dibutyl carbonate.
Examples of the diaryl carbonate include, but are not particularly limited to, diphenyl carbonate.
Among others, the carbonate compound for use in the production of the polycarbonate diol (I-1) is preferably ethylene carbonate, dimethyl carbonate, diethyl carbonate, diphenyl carbonate, more preferably ethylene carbonate.

(Diol compound)

Examples of the diol compound for use in the production of the polycarbonate diol (I-1) include, but are not limited to, linear diol, branched diol, cyclic diol, and diol having an aromatic ring.
Examples of the linear diol include, but are not particularly limited to, ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, and 1,12-dodecanediol.
Examples of the branched diol include, but are not particularly limited to, 2-methyl-1,8-octanediol, neopentyl glycol, 2-ethyl-1,6-hexanediol, 2-methyl-1,3-propanediol, 3-methyl-1,5-pentanediol, 2,4-dimethyl-1,5-pentanediol, and 2,4-diethyl-1,5-pentanediol.
Examples of the cyclic diol include, but are not particularly limited to, 1,3-cyclohexanediol, 1,4-cyclohexanediol, 1,4-cyclohexanedimethanol, and 2-bis(4-hydroxycyclohexyl)-propane.
Examples of the diol having an aromatic ring include, but are not particularly limited to, p-xylenediol, p-tetrachloroxylenediol, 1,4-bis(hydroxyethoxy)benzene, 2,2-bis[(4-hydroxyethoxy)phenyl]propane.
Among others, linear or branched diol having 3 or more and 10 or less carbon atoms is preferred, 1,3-propanediol, 1,4-butanediol, 1,5-pentanediol or 1,6-hexanediol, 1,9-nonanediol, 1,10-decanediol, 2-methyl-1,3-propanediol, 3-methyl-1,5-pentanediol is preferred, and 1,4-butanediol, 1,5-pentanediol or 1,6-hexanediol is more preferred.

[Production conditions for polycarbonate diol composition and polycarbonate diol (I-1)]

For the production of the starting material polycarbonate diol (I-1), a transesterification reaction catalyst can be used. The catalyst can be selected from usual transesterification reaction catalysts.
Examples of the transesterification reaction catalyst include, but are not particularly limited to, alkali metals and alkaline earth metals, and alcoholates thereof, hydrides thereof, oxides thereof, amides thereof, hydroxides thereof and salts thereof.
Examples of the salts of the alkali metal and the alkaline earth metal include, but are not particularly limited to, carbonate, nitrogen-containing borate, and basic salts with organic acids.
Examples of the alkali metal include, but are not particularly limited to, lithium, sodium, and potassium.
Examples of the alkaline earth metal include, but are not particularly limited to, magnesium, calcium, strontium, and barium.
Examples of the transesterification catalyst using a metal other than alkali metals and alkaline earth metals include, but are not particularly limited to, metals other than alkali metals and alkaline earth metals, and salts thereof, alcoholates thereof, and organic compounds containing the metals.
Specific examples of the metal other than alkali metals and alkaline earth metals include, but are not particularly limited to, aluminum, titanium, vanadium, chromium, manganese, iron, cobalt, nickel, copper, zinc, gallium, germanium, zirconium, niobium, molybdenum, ruthenium, rhodium, palladium, silver, indium, tin, antimony, tungsten, rhenium, osmium, iridium, platinum, gold, thallium, lead, bismuth, and ytterbium.
One of these transesterification catalysts can be used singly, or two or more thereof can be used in combination.

Among others, the transesterification reaction catalyst is preferably at least one metal selected from the group consisting of sodium, potassium, magnesium, potassium, titanium, zirconium, tin, lead and ytterbium, or a salt thereof, an alkoxide thereof, or an organic compound containing the metal, because transesterification reaction to obtain the polycarbonate diol is more favorably performed, and use of the resulting polycarbonate diol has less influence on urethane reaction.

The transesterification reaction catalyst is more preferably at least one metal selected from the group consisting of magnesium, titanium, ytterbium, tin and zirconium.

Specific examples of the preferred transesterification catalyst include, but are not particularly limited to, organic compounds of magnesium, organic compounds of lead, and organic compounds of titanium.

Examples of the organic compound of magnesium include, but are not particularly limited to, magnesium acetate tetrahydrate and magnesium acetate anhydride.

Examples of the organic compound of lead include, but are not particularly limited to, lead acetate trihydrate, tetraphenyl lead, and lead stearate.

Examples of the organic compound of titanium include, but are not particularly limited to, titanium tetra-n-butoxide, titanium tetra-n-propoxide, and titanium tetraisopropoxide.

The amount of the transesterification reaction catalyst used is preferably 0.00001% by mass or more and 0.1% by mass or less, more preferably 0.0001% by mass or more and 0.05% by mass or less, based on the total mass of the starting materials.

The transesterification catalyst used in transesterification reaction is not consumed by the transesterification reaction when heat treatment is performed subsequently to the production of the polycarbonate diol. Therefore, its amount can be calculated on the basis of the amount of the transesterification reaction catalyst used. In the case of using, for example, commercially available polycarbonate diol, the amount of a metal of the transesterification reaction catalyst contained in the polycarbonate diol is determined by ICP (inductively coupled plasma) measurement.

The polycarbonate diol (I-1) for use in the production of the polycarbonate diol composition of the present embodiment may be supplemented with a catalyst poison such as a phosphoric acid ester compound in order to deactivate the transesterification reaction catalyst used in the production thereof.

When the starting material polycarbonate diol (I-1) contains a catalyst poison for the transesterification reaction catalyst, etc. used in the production thereof, the transesterification reaction of the ether diol (II-1) and ester diol (IV-1) with the polycarbonate diol (I-1) usually tends to be less likely to progress. Hence, for the production of the polycarbonate diol composition of the present embodiment, the transesterification reaction catalyst described above can be newly added in a necessary amount.

On the other hand, when the starting material polycarbonate diol (I-1) contains no catalyst poison for the transesterification reaction catalyst, the transesterification reaction according to the present embodiment usually tends to be more likely to progress. However, in the case of, for example, further lowering a reaction temperature or further shortening a reaction time in the process of producing the polycarbonate diol composition of the present embodiment, the transesterification reaction catalyst can also be newly added in a necessary amount. In this case, the same transesterification reaction catalyst as that used in the production of the starting material polycarbonate diol (I-1) can be adopted.

The polycarbonate diol (I-1) for use in the production of the polycarbonate diol composition of the present embodiment may be homo polycarbonate diol obtained from one diol compound, or may be a copolymeric polycarbonate diol obtained from two or more diol compounds.

Use of any of the above-listed polycarbonate diols (I-1) can produce the polycarbonate diol composition through transesterification reaction.

However, for example, homo polycarbonate diol obtained using 1,6-hexanediol, which is widely used on the market, is usually a solid at ordinary temperature. Hence, a polycarbonate diol composition obtained through the transesterification reaction of the homo polycarbonate diol tends to be also a solid at ordinary temperature.

On the other hand, for example, copolymeric polycarbonate diol obtained using any two types of 1,4-butanediol, 1,5-pentanediol and 1,6-hexanediol is a liquid at ordinary temperature. Hence, a polycarbonate diol composition obtained through the transesterification reaction of the copolymeric polycarbonate diol tends to be also a liquid at ordinary temperature.

(n11)

In the general formula (I-1), n11 represents the number of repeats of the carbonate structure ($-R^{111}-O-COO-$). n11 is any integer, and the average value of n11 is preferably in the range of 1 or larger and 50 or smaller, more preferably in the range of 2 or larger and 50 or smaller, further preferably in the range of 3 or larger and 30 or smaller, particularly preferably in the range of 4 or larger and 20 or smaller.

The number-average molecular weight of the polycarbonate diol (I-1) for use in the production of the polycarbonate diol composition of the present embodiment is not particularly limited and is preferably 500 or higher and 5000 or lower, more preferably 1000 or higher and 3000 or lower.

When the number-average molecular weight of the polycarbonate diol (I-1) is equal to or more than the lower limit value described above, performance expected for the polycarbonate diol composition tends to be better. On the other hand, a number-average molecular weight of the polycarbonate diol (I-1) equal to or less than the upper limit value described above is preferred in terms of handleability at the time of production of the polycarbonate diol composition.

[Ether diol (II-1)]

The ether diol (II-1) for use in the production of the polycarbonate diol composition of the present embodiment can be any compound having a structure represented by the general formula (II-1). Among others, the ether diol (II-1) is preferably a polyoxyalkylene diol having primary hydroxy group at both ends. Products having various molecular weights are commercially available as the ether diol (II-1), and such a commercially available product may be used. Examples of the commercially available product of the ether diol (II-1) include, but are not particularly limited to, polyoxyalkylene diols such as "Newpol" series, "Primepol" series, and "Sunnix" series manufactured by Sanyo Chemical Industries, Ltd., "Plonon" series manufactured by NOF Corp., "Preminol" and "Excenol" series manufactured by AGC Inc., and "PTMG" series manufactured by Mitsubishi Chemical Corp., and polyether glycols such as PTXG manufactured by Asahi Kasei Corporation.

The number-average molecular weight of the ether diol (II-1) is not particularly limited and is preferably 400 or higher and 3000 or lower, more preferably 600 or higher and 2500 or lower. When the number-average molecular weight of the ether diol (II-1) for use in production is equal to or higher than the lower limit value described above, the flexibility tends to be better at the time of use in polyurethane, and when the number-average molecular weight of the ether diol (II-1) for use in production is equal to or lower than the upper limit value described above, the crystallinity of the polycarbonate diol composition of the present embodiment tends to be further suppressed.

[Polycaprolactone diol (III-1) and cyclic ester compound]

The polycarbonate diol (III-1) for use in the production of the polycarbonate diol composition of the present embodiment can be any compound having a structure represented by the general formula (III-1). Among these, products having various molecular weights are commercially available as the polycaprolactone diol (III-1), and such a commercially available product may be used. Examples of the commercially available products include, but are not particularly limited to, "PLACCEL" series manufactured by Daicel Organic Synthesis Company and "POLYLITE" series manufactured by DIC Corporation.

(n311)

In the general formula (III-1), n311 represents the number of repeats of the structure ($-R^{311}$-O-CO-). In the general formula (III-1), n311 is any integer, the average value of n311 is 1 or larger, preferably in the range of 1 or larger and 50 or smaller, more preferably in the range of 1 or larger and 30 or smaller, particularly preferably in the range of 1 or larger and 20 or smaller.

The number-average molecular weight of the polycaprolactone diol (III-1) is not particularly limited and is preferably 400 or higher and 3000 or lower, more preferably 600 or higher and 2000 or lower. When the number-average molecular weight of the lactone diol (III-1) for use in production is equal to or higher than the lower limit value described above, the flexibility of polyurethane obtained from the polycarbonate diol composition of the present embodiment tends to be better, and when the number-average molecular weight of the lactone diol (III-1) is equal to or lower than the upper limit value described above, the polycarbonate diol composition of the present embodiment tends to have lower viscosity.

Alternatively, a cyclic ester compound may be ring-opening polymerized.

Examples of the cyclic ester compound include, but are not particularly limited to, cyclic ester compounds having 3 to 12 carbon atoms, such as β-propiolactone, γ-butyrolactone, δ-valerolactone, ε-caprolactone, β-butyrolactone, γ-valerolactone, α-methyl-ε-caprolactone, β-methyl-ε-caprolactone, γ-methyl-ε-caprolactone, β,δ-dimethyl-ε-caprolactone, 3,3,5-trimethyl ε-caprolactone, and enantholactone (4-heptanolide). Particularly, it is preferred to use ε-caprolactone that provides a structural unit (III) in which $R^{31}$ in the formula (III) is a linear alkylene group having 5 carbon atoms.

[Ester diol (IV-1)]

The ester diol (IV-1) for use in the production of the polycarbonate diol composition of the present embodiment can be any compound having a structure represented by the general formula (IV-1). Among these, products having various molecular weights are commercially available as the ester diol (IV-1), and such a commercially available product

may be used. Examples of the commercially available product of the ether diol (II-1) include, but are not particularly limited to, "POLYLITE" series manufactured by DIC Corporation, "Kuraray Polyol" series manufactured by Kuraray Co., Ltd., "Nipporane" series manufactured by TOSOH CORPORATION, and "ADEKA NEWACE" series manufactured by ADEKA Corporation.

(n411)

In the general formula (IV-1), n411 represents the number of repeats of the structure (-CO-$R^{411}$-CO-O-$R^{421}$-O-). In the general formula (IV-1), n411 is any integer, the average value of n411 is 1 or larger, preferably in the range of 1 or larger and 50 or smaller, more preferably in the range of 2 or larger and 30 or smaller, particularly preferably in the range of 4 or larger and 20 or smaller.

The number-average molecular weight of the ester diol (IV-1) is not particularly limited and is preferably 400 or higher and 3000 or lower, more preferably 600 or higher and 2000 or lower. When the number-average molecular weight of the ester diol (IV-1) for use in production is equal to or higher than the lower limit value described above, the flexibility of polyurethane obtained from the polycarbonate diol composition of the present embodiment tends to be better, and when the number-average molecular weight of the ester diol (IV-1) is equal to or lower than the upper limit value described above, the polycarbonate diol composition of the present embodiment tends to have lower viscosity.

The method for producing the polycarbonate diol composition of the present embodiment is not particularly limited, and is preferably production by mixing the polycarbonate diol (I-1) and at least one compound selected from the group consisting of the ether diol (II-1), the ester diol (IV-1), and a cyclic ester compound, and stirring the mixture under heating.

The temperature during the reaction is not particularly limited and is preferably 120°C or higher and 200°C or lower, more preferably 140°C or higher and 180°C or lower.

When the reaction temperature is equal to or higher than the lower limit value described above, the transesterification reaction can be performed in a shorter time, and the cost efficiency tends to be excellent. When the reaction temperature is equal to or lower than the upper limit value described above, the acid value of the resulting polycarbonate diol composition tends to be able to be controlled in a specific range, and coloring tends to be able to be more effectively prevented.

At the time of production, the oxygen concentration is preferably allowed to be 0.5% or lower. Example of a method for allowing the oxygen concentration to be 0.5% or lower include, but are not particularly limited to, substituting with nitrogen equivalent to 1.5 times or more the reactor and then performing the reaction under nitrogen flow, and reducing the pressure to 0.1 kPa.s or lower, then substituting with nitrogen, and performing the reaction under slightly reduced pressure. When the oxygen concentration is allowed to be 0.5% or lower, generation of peroxides tends to be suppressed, and coloring of the resulting polycarbonate diol composition tends to be able to be prevented.

In order to allow the oxygen concentration to be 0.5% or lower, nitrogen is allowed to flow preferably at a nitrogen flow rate of 0.1 L/min or higher and 50 L/min or lower, allowed to flow more preferably at a nitrogen flow rate of 0.2 L/min or higher and 30 L/min or lower. When the nitrogen flow rate is equal to or higher than the lower limit value described above, mixing of oxygen is prevented, which is preferred. When the nitrogen flow rate is equal to or lower than the upper limit value described above, volatilization of the starting material diol can be prevented, and the hydroxyl value of the resulting polycarbonate diol composition tends to be able to be constant.

[Application]

The polycarbonate diol composition of the present embodiment can be used as a starting material of a polyurethane for reaction with polyisocyanate. A polyurethane prepared using the polycarbonate diol composition of the present embodiment is excellent in chemical resistance, heat resistance, and weather resistance and can therefore be widely used in foams, elastomers, coating materials, coating agents, pressure-sensitive adhesives, adhesives, artificial leather, synthetic leather, aqueous polyurethane coating materials, and the like. Further, the polyurethane can be used in application such as a polyester or polyimide modifier.

[Polyurethane]

The polyurethane of the present embodiment is prepared using the polycarbonate diol composition mentioned above.

[Δ stress at 100% stretch]

In the polyurethane of the present embodiment, with respect to a stress at 100% stretch according to a tensile

test, $\Delta M$ calculated by the following expression (B) is preferably 1.0 or larger and 19.0 or smaller, more preferably 3.5 or larger and 18.5 or smaller, further preferably 5.0 or larger and 17.0 or smaller:

$$\Delta M = M1 - M2 \ldots (B)$$

wherein M1 represents a stress at 100% stretch in a tensile test under a -20°C condition, and M2 represents a stress at 100% stretch in a tensile test under a 23°C condition.

The polyurethane of the present embodiment tends to be excellent in balance between flexibility and durability when $\Delta M$ is equal to or larger than the lower limit value described above. When $\Delta M$ is equal to or smaller than the upper limit value described above, the polyurethane of the present embodiment has a small difference in elastic moduli caused by temperatures and thus tends to be excellent in mechanical physical properties at low temperatures.

The method for producing the polyurethane of the present embodiment usually employs polyurethanization reaction conditions known in the art for producing polyurethane and can be conducted with no solvent or in coexistence of a solvent.

Examples thereof include, but are not particularly limited to, a method of mixing the polycarbonate diol composition mentioned above, other polyols, polyisocyanate and a chain extender in one lump for reaction (hereinafter, also referred to as a "one-shot method"), and a method of first reacting the polycarbonate diol composition mentioned above, other polyols and polyisocyanate to prepare a prepolymer having isocyanate groups at both ends, and then reacting the prepolymer with a chain extender (hereinafter, also referred to as a "prepolymer method").

The isocyanate compound contained in the polyurethane of the present embodiment is not particularly limited as long as the compound works as a curing agent. A compound having two or more terminal isocyanate groups is used.

Examples of such an isocyanate compound include, but are not particularly limited to, chain aliphatic diisocyanate, cyclic aliphatic diisocyanate, aromatic diisocyanate, and isocyanate compounds having three or more isocyanate groups, and isocyanurate-modified products and biuret-modified products of these isocyanate compounds.

Examples of the chain aliphatic diisocyanate include, but are not particularly limited to, hexamethylene diisocyanate and trimethylhexamethylene diisocyanate.

Examples of the cyclic aliphatic diisocyanate include, but are not particularly limited to, isophorone diisocyanate, 1,4-cyclohexane diisocyanate, 1-methyl-2,4-cyclohexane diisocyanate, 1-methyl-2,6-cyclohexane diisocyanate, and 4,4'-dicyclohexylmethane diisocyanate.

Examples of the aromatic diisocyanate include, but are not particularly limited to, tolylene diisocyanate, 4,4'-diphenylmethane diisocyanate (hereinafter, also abbreviated to "MDI"), xylylene diisocyanate and naphthylene diisocyanate.

Examples of the isocyanate compound having three or more isocyanate groups include, but are not particularly limited to, triphenylmethane-4,4'-4'-triisocyanate, 1,3,5-triisocyanatobenzene, 2,4,6-triisocyanatotoluene and 4,4'-dimethyldiphenylmethane-2,2',5,5'-tetraisocyanate.

A commercially available product may be used as the isocyanate compound, or the isocyanate compound may be synthesized by use of a method known in the art.

The content of the isocyanate compound can be appropriately adjusted according to the molar quantity of a hydroxy group in the base agent polyol. Specifically, the molar ratio (NCO/OH) of an isocyanate group in the isocyanate compound to a hydroxy group in the polycarbonate diol can be, for example, 0.2 or more and 5.0 or less, can be, for example, 0.4 or more and 3.0 or less, and can be, for example, 0.5 or more and 2.0 or less. When NCO/OH is equal to or more than the lower limit value described above, a stronger coating film tends to be obtained. On the other hand, when NCO/OH is equal to or less than the upper limit value described above, the smoothness of a coating film tends to be better.

Examples of the chain extender for use in producing the polyurethane of the present embodiment can usually include, but are not particularly limited to, polyol and polyamine.

Examples of the polyol include, but are not particularly limited to, linear diol, branched diol, cyclic diol, and diol having an aromatic ring.

Examples of the linear diol include, but are not particularly limited to, ethylene glycol, 1,3-propanediol, 1,5-pentanediol, 1,6-hexanediol, 1,7-heptanediol, 1,8-octanediol, 1,9-nonanediol, 1,10-decanediol, 1,11-undecanediol, and 1,12-dodecanediol.

Examples of the branched diol include, but are not particularly limited to, 2-methyl-1,8-octanediol, neopentyl glycol, 2-ethyl-1,6-hexanediol, 2-methyl-1,3-propanediol, 3-methyl-1,5-pentanediol, 2,4-dimethyl-1,5-pentanediol, and 2,4-diethyl-1,5-pentanediol.

Examples of the cyclic diol include, but are not particularly limited to, 1,3-cyclohexanediol, 1,4-cyclohexanediol, 1,4-cyclohexanedimethanol, and 2-bis(4-hydroxycyclohexyl)-propane.

Examples of the diol having an aromatic ring include, but are not particularly limited to, p-xylenediol, p-tetrachloroxylenediol, 1,4-bis(hydroxyethoxy)benzene, and 2,2-bis[(4-hydroxyethoxy)phenyl]propane.

Examples of the polyamine include, but are not particularly limited to, hydroxyamines and polyamines.

Examples of the hydroxyamines include, but are not particularly limited to, N-methylethanolamine and N-ethylethanolamine.

Examples of the polyamines include, but are not particularly limited to, ethylenediamine, 1,3-diaminopropane, hexamethylenediamine, triethylenetetramine, diethylenetriamine, isophoronediamine, 4,4'-diaminodicyclohexylmethane, 2-hydroxyethylpropylenediamine, di-2-hydroxyethylethylenediamine, di-2-hydroxyethylpropylenediamine, 2-hydroxypropylethylenediamine, di-2-hydroxypropylethylenediamine, 4,4'-diphenylmethanediamine, methylenebis(o-chloroaniline), xylylenediamine, diphenyldiamine, tolylenediamine, hydrazine, piperazine, and N,N'-diaminopiperazine.

These chain extenders may be used singly or may be used in combination of two or more thereof.

[Synthetic leather]

The synthetic leather of the present embodiment comprises the polyurethane mentioned above.

Examples of the synthetic leather of the present embodiment include, but are not particularly limited to, a synthetic leather comprising a base fabric, an adhesive layer, an intermediate layer, and a surface skin layer laminated in order. In such a synthetic leather, at least one selected from the group consisting of a base fabric, an adhesive layer, an intermediate layer, and a surface skin layer preferably contains the polyurethane mentioned above.

As the base fabric (base material), various materials can be used, and examples thereof include, but are not particularly limited to, fibrous base materials. Examples of the fibrous base material include, but are not particularly limited to, a fiber assembly obtained by making fiber into a non-woven fabric, woven fabric, or mesh cloth form, or a fiber assembly in which fibers are bonded with each other by an elastic polymer. Examples of fiber for use in the fiber assembly include, but are not particularly limited to, natural fibers such as cotton, hemp, and wool, regenerated or semi-synthetic fibers such as rayon and acetate, and synthetic fibers such as polyamide, polyester, polyacrylonitrile, polyvinyl alcohol, and polyolefin. These fibers may by single spun fibers or mixed spun fibers. Examples of other base materials include, but are not particularly limited to, paper, release paper, plastic films of polyester or polyolefin, metal plates such as aluminum, and glass plates.

In the synthetic leather of the present embodiment, the polyurethane mentioned above is preferably used in an adhesive layer, an intermediate layer, and a surface skin layer. In forming each layer, a crosslinking agent, other resins, an antioxidant, an ultraviolet absorber, a hydrolysis inhibitor, a pigment, a dye, a colorant, a flame retardant, an organic solvent, and the like can be added as required.

The method for producing the synthetic leather of the present embodiment is not particularly limited as long as the polyurethane mentioned above is used, and a method for producing a synthetic leather known in the art can be used.

[Coating material or coating agent composition]

The coating material or coating agent composition (coating material) of the present embodiment is prepared using the polycarbonate diol composition mentioned above.

A production method known in the art is used as a method for producing the coating material or coating agent composition (coating material) using the polycarbonate diol composition mentioned above. Examples of such a composition that can be produced include: a two-component solvent-based coating composition in which a coating material base agent obtained from the polycarbonate diol composition mentioned above is mixed with a curing agent made of polyisocyanate immediately before coating; a one-component solvent-based coating composition consisting of a urethane polymer having a terminal isocyanate group obtained by reacting the polycarbonate diol mentioned above with polyisocyanate; and a one-component solvent-based coating composition consisting of a polyurethane resin obtained by reacting the polycarbonate diol mentioned above, organic polyisocyanate and a chain extender.

The coating material or coating agent composition (coating material) of the present embodiment can be supplemented with other additives, for example, a curing accelerator (catalyst), a leveling agent, a filler, a dispersant, a flame retardant, a dye, an organic or inorganic pigment, a mold release agent, a rheology modifier, a plasticizer, an antioxidant, an ultraviolet absorber, a light stabilizer, an antifoaming agent, a colorant, and a solvent, according to various applications. A coating material composition differing in nature, such as a soft-feel coating material and a clear coating material, can be obtained by appropriately containing these other additives.

Examples of the curing accelerator (catalyst) include, but are not particularly limited to, those generally used such as monoamine, diamine, triamine, cyclic amine, alcohol amine, ether amine, and metal catalysts.

Examples of the monoamine include, but are not particularly limited to, triethylamine and N,N-dimethylcyclohexylamine. Examples of the diamine include, but are not particularly limited to, tetramethylethylenediamine.

Examples of the alcohol amine include, but are not particularly limited to, dimethylethanolamine.

Examples of the metal catalyst include, but are not particularly limited to, potassium acetate, potassium 2-ethylhexanoate, calcium acetate, lead octylate, dibutyltin dilaurate, tin octylate, bismuth neodecanoate, bismuth oxycarbonate, bismuth 2-ethylhexanoate, zinc octylate, zinc neodecanoate, phosphine, and phosphorine.

Specific examples of the organic solvent include, but are not particularly limited to, amide solvents, sulfoxide solvents, ketone solvents, ether solvents, ester solvents, carbonic acid ester solvents, and aromatic hydrocarbon solvents.

These organic solvents may be used singly or may be used as a mixed solvent of two or more thereof.

Examples

Hereinafter, the present embodiment will be described further specifically with reference to specific Examples and Comparative Examples. However, the present embodiment is not limited by these Examples and Comparative Examples by any means without departing from the spirit of the present invention. In the present Examples, the terms "parts" and "%" are based on mass, unless otherwise specified.

Physical properties and evaluation in Examples and Comparative Examples mentioned later were measured and performed by the following methods.

[Physical property 1] Hydroxy value

The hydroxy value of polycarbonate diol (composition) was measured by the following method.

First, a volumetric flask was used, and pyridine was added to 12.5 g of acetic anhydride so as to bring the amount to 50 mL, to prepare an acetylation reagent. Subsequently, in a 100 mL eggplant-shaped flask, 2.5 g of a sample was weighed. Subsequently, to the eggplant-shaped flask, 5 mL of the acetylation reagent and 10 mL of toluene were added with a whole pipette. Then, a condenser was attached to the flask, and the solution in the eggplant-shaped flask was stirred and heated at 100°C for 1 hour. Subsequently, to the eggplant-shaped flask, 2.5 mL of distilled water was added with a whole pipette, and then, the solution in the eggplant-shaped flask was further heated and stirred for 10 minutes. After cooling of the solution in the eggplant-shaped flask for 2 to 3 minutes, to the eggplant-shaped flask, 12.5 mL of ethanol was added. Subsequently, to the eggplant-shaped flask, 2 to 3 drops of phenolphthalein were added as an indicator, followed by titration with 0.5 mol/L ethanolic potassium hydroxide. Subsequently, in a 100 mL eggplant-shaped flask, 5 mL of the acetylation reagent, 10 mL of toluene and 2.5 mL of distilled water were placed, and the solution in the eggplant-shaped flask was heated and stirred for 10 minutes, followed by titration in the same way as above (blank test). On the basis of the results, the hydroxy value of the polycarbonate diol (composition) was calculated according to the following expression (i):

$$\text{Hydroxy value (mg-KOH/g)} = \{(F - E) \times 28.05 \times f\} / G \quad \ldots \text{(i)}$$

In the expression (i), E represents the amount of the sample titrated (mL); F represents the amount titrated (mL) in the blank test; G represents the mass of the sample (g); and f represents the factor of the titration solution.

[Physical property 2] Number-average molecular weight (A)

The number-average molecular weight (A) of the polycarbonate diol (composition) was calculated from the hydroxy value determined in [Physical property 1] using the following expression (ii):

$$\text{Number-average molecular weight (A)} = 2 / (H \times 10^{-3} / 56.11) \quad \ldots \text{(ii)}$$

In the expression (ii), H represents the hydroxy value (mg-KOH/g) of the polycarbonate diol (composition).

In Examples and Comparative Examples mentioned later, as the number-average molecular weight Mn of the polycarbonate diol composition applied to the following expression 1, the number-average molecular weight (A) calculated by the expression (ii) described above was used:

$$xy \geq 3.7 \times \alpha \ (\alpha = 22.4 \times Mn^{-0.41}) \quad \ldots \text{(Expression 1)}$$

wherein x is the proportion of the content (% by mass) of the repeating structural unit represented by the general formula (I) based on the total mass (% by mass) of the repeating structural units represented by the general formulas (I) to (IV), y is the amount of the polycarbonate diol composition titrated (mL) in a cloud point titration method, and Mn is a number-average molecular weight of the polycarbonate diol composition.

[Physical property 3] Molecular weight (B)

A portion of the polyurethane film obtained in each of Application Examples and Application Comparative Examples mentioned later was cut off, and a N,N-dimethyl formamide solution was prepared such that the concentration of the polyurethane was 0.1% by mass. The number-average molecular weight (Mn) and the weight-average molecular weight (Mw) of the polyurethane based on standard polystyrene were measured using a GPC apparatus [manufactured by TOSOH CORPORATION, product name "HLC-8320" (Column: four columns of Tskgel Super HM-H), a solution of 2.6 g of lithium bromide dissolved in 1 L of dimethylformamide was used as an eluent]. The molecular weight distribution (Mw/Mn) was calculated from these measurement results.

[Physical property 4] Hazen color number (APHA)

The APHA of the polycarbonate diol composition obtained in each of Examples and Comparative Examples mentioned later was measured in comparison with a standard solution placed in a colorimetric tube, in accordance with JIS K0071-1 (2017). The reagent used was Color standard solution 1000 (FUJIFILM Wako Pure Chemical Corporation). Solutions were prepared in increments of 5 up to APHA 30 for determination. A slightly clouded solution was warmed at 60°C for dissolution before the measurement.

[Physical property 5] Cloud point titration

0.5 g of a polycarbonate diol composition obtained in each of Examples and Comparative Examples mentioned later was dissolved in 8.8 g of butyl acetate under a 25°C condition. Hexane was added dropwise in small portions while the resulting solution was stirred, the amount titrated was determined when the solution began to be cloudy, and the cloud point titration was calculated by the following expression (iii).

$$\text{Cloud point titration} = 0.5 \times I \times 56.1 / (J \times K) \quad \ldots \quad \text{(iii)}$$

In the following expression (iii), I represents the amount titrated (mL) determined above, J represents the sample mass weighed (g), and K represents the hydroxy value (mg-KOH/g) of the polycarbonate diol composition.

[Physical property 6] Acid value

The acid value of the polycarbonate diol composition obtained in each of Examples and Comparative Examples mentioned later was determined by a method in accordance with JIS K0070-1992 except that the solvent was replaced with toluene/ethanol (2/1).

[Physical property 7] Structural unit (I) content in polycarbonate diol composition

One gram of a sample of the polycarbonate diol composition obtained in each of Examples and Comparative Examples mentioned later was taken in a 100 mL eggplant-shaped flask, in which 30 g of methanol and 8 g of 28% sodium methoxide methanol solution were added, and the mixture was reacted at 100°C for an hour. The reaction solution was cooled to room temperature, and two to three drops of phenolphthalein were added as an indicator to the mixture, which was then neutralized with hydrochloric acid. After cooled in a refrigerator for an hour, the solution was filtered through a filter, and the filtrate was analyzed using gas chromatography (GC). GC analysis was performed using Gas chromatography GC-14B (manufactured by Shimadzu Corporation, Japan) equipped with DB-WAX (manufactured by J&W, the United States) as a column, with diethylene glycol diethyl ester as an internal standard and a hydrogen flame ionization detector (FID) as a detector, to quantitatively analyze each component. For the temperature rise profile of the column, the temperature was maintained at 60°C for 5 minutes and then raised up to 250°C at 10°C/min.

The composition of the polycarbonate diol composition was determined with each of the alcohol component and the methyl ester component derived from dibasic acid detected from the analysis results described above.

When no methyl ester component derived from dibasic acid was detected, with respect to the composition of a polyester polycarbonate polyol containing dibasic acid, a value obtained by subtracting the same number of moles of diol as the number of moles of the methyl ester derived from dibasic acid was used to determine the number of moles of the diol(s) constituting the carbonate skeleton (when a plurality of diols were used, the calculation was made with the proportion of diol determined by gas chromatography, with an assumption that the composition of the diol in the carbonate skeleton and the composition of the diol of the ester skeleton were identical).

[Physical property 8] Peroxide value (POV)

The test portion of POV test paper (Sibata Scientific Technology Ltd.) was immersed in a sample of the polycarbonate diol composition obtained in each of Examples and Comparative Examples mentioned later, left for 3 minutes, and washed with pure water. The POV test paper of the sample was compared with the standard color sample, and the peroxide value (POV) in the sample was determined as follows.

[Determination criteria]

○: 0 meq/kg or more and 3 meq/kg or less, which is detected as 0 in the standard color sample.
△: More than 3 meq/kg and 10 meq/kg or less, which is equivalent to 10 in the standard color sample.
×: More than 10 meq/kg and 40 meq/kg or less, which is equivalent to 30 in the standard color sample.

[Physical property 9] Stability of quality

The polycarbonate diol composition obtained in each of Examples and Comparative Examples mentioned later was stored under a 25°C condition for six months, and the stability of quality was evaluated based on the change in the appearance in comparison with that immediately after production, as follows.

[Evaluation criteria]

○: No change in the appearance in comparison with that immediately after production.
×: The appearance has changed in comparison with that immediately after production (e.g., separation into two layers, clouding, or precipitation).

[Evaluation 1] Compatibility evaluation (polyol)

The compatibility of the polycarbonate diol composition obtained in each of Examples and Comparative Examples mentioned later was evaluated as follows. As an exemplary polyol, a polyester polyol (manufactured by Showa Denko Materials Co., Ltd., "Teslac 2460" (trade name), number-average molecular weight: approximately 2000) was used. The polyester polyol and the polycarbonate diol composition were mixed and stirred in order at a mass ratio of 7:3, and the compatibility was evaluated based on the appearance of the resulting solution as follows.

[Evaluation criteria]

○: Transparent
△: Somewhat cloudy or slightly separated into two layers
×: Cloudy

[Evaluation 2] Compatibility evaluation (solvent)

The compatibility of the polycarbonate diol composition obtained in each of Examples and Comparative Examples mentioned later was evaluated as follows. An exemplary solvent, methyl isobutyl ketone (hereinafter, also referred to as "MIBK") was used. The polycarbonate diol composition was blended in methyl isobutyl ketone such that the solid content was 75%, and the blend was mixed and stirred under 25°C and left to stand for 30 minutes. Then, the compatibility

was evaluated based on the appearance of the resulting solution as follows.

[Evaluation criteria]

○: Transparent
△: Somewhat cloudy
×: Cloudy

[Evaluation 3] Tensile test at ordinary temperature

A strip of a test specimen having a width of 10 mm, a length of 100 mm, and a thickness of approximately 0.1 mm was prepared from a polyurethane film obtained in each of Application Examples and Application Comparative Examples mentioned later in accordance with JIS K6250 (2019). A tensile test was conducted as to the prepared test specimen at a temperature of 23°C (relative humidity: 55%) at a distance between chucks of 20 mm and a pulling rate of 100 mm/min using a tensile tester (manufactured by Orientec Co., Ltd., product name "Tensilon, model RTE-1210"). Stress when the test specimen was stretched by 100% (100% modulus) was measured. A lower 100% modulus was evaluated as better flexibility at ordinary temperature.

[Evaluation 4] Tensile test at low temperature

A strip of a test specimen having a width of 10 mm, a length of 100 mm, and a thickness of approximately 0.1 mm was prepared from a polyurethane film obtained in each of Application Examples and Application Comparative Examples mentioned later in accordance with JIS K6250 (2019). The prepared test specimen was loaded at a distance between chucks of 20 mm in a tensile tester (manufactured by Orientec Co., Ltd., product name "Tensilon, model RTE-1210") with a thermostat bath (manufactured by Orientec Co., Ltd., "model TLF-R3T-E-W"). Subsequently, the test specimen was left standing at - 20°C for 5 minutes. Then, the tensile test of the test specimen was conducted at a pulling rate of 100 mm/min. Stress when the test specimen was stretched by 100% (100% modulus) was measured. A lower 100% modulus was evaluated as better flexibility at low temperature.

[Evaluation 5] Δ stress at 100% stretch (hereinafter, also referred to as "ΔM")

ΔM was determined from the 100% moduli (stress at 100% stretch) determined in [Evaluation 1] and [Evaluation 2] by the following expression (B):

$$\Delta M = M1 - M2 \quad \ldots \text{(B)}$$

wherein M1 is the stress at 100% stretch under a -20°C condition determined in [Evaluation 2], and M2 is the stress at 100% stretch under a 23°C condition determined in [Evaluation 1].

[Evaluation 6] Evaluation of moist heat resistance

A strip of a sample having a width of 10 mm, a length of 100 mm, and a thickness of approximately 100 m was prepared from a polyurethane film obtained in each of Application Examples and Application Comparative Examples mentioned later. The prepared sample was heated under conditions involving a temperature of 85°C and a humidity of 85% for 10 days in a thermo-hygrostat manufactured by ESPEC Corp. under product name of "PL-1J". The breaking strength of the sample thus heated was measured in the same manner as in <Tensile test at ordinary temperature> described above, and the retention (%) of the breaking strength was determined by the following expression (C).

$$\text{Retention} = \text{Breaking strength after heating} / \text{Breaking strength before heating} \times 100 \quad \ldots \text{(C)}$$

[Evaluation 7] ΔAPHA of polyurethane solution

The polyurethane solution obtained in each of Application Examples and Application Comparative Examples mentioned later was stored in a compact environmental tester at 40°C, and the change over time between the APHA of the polyurethane solution immediately after preparation and the APHA of the polyurethane solution after storage for three months at 40°C (ΔAPHA (after storage for three months - immediately after preparation)) was measured.

In tables and the specification, abbreviations are as follows.

A-1: Polyoxytetramethylene glycol (manufactured by Mitsubishi Chemical Corp., "PTMG2000" (trade name), number-average molecular weight: approximately 2000, in the general formula (II-1), $R^{211}$: tetramethylene group, n211: approximately 28)
A-2: Polyoxytetramethylene glycol (manufactured by Mitsubishi Chemical Corp., "PTMG1000" (trade name), number-average molecular weight: approximately 1000, in the general formula (II-1), $R^{211}$: tetramethylene group, n211: approximately 14)
A-3: Polyoxyethylene polyoxypropylene glycol (manufactured by Sanyo Chemical Industries, Ltd., "Newpol PE-61" (trade name), number-average molecular weight: approximately 2000, in the general formula (II-1), $R^{211}$: isopropylene group and methylene group, n211: approximately 35)
A-4: Polyoxyethylene polyoxypropylene glycol (manufactured by Sanyo Chemical Industries, Ltd., "Newpol PE-62" (trade name), number-average molecular weight: approximately 2400, in the general formula (II-1), $R^{211}$: isopropylene group and methylene group, n211: approximately 44)
A-5: Copolymer of tetrahydrofuran and neopentyl glycol (manufactured by Asahi Kasei Corporation, "PTXG" (trade name), number-average molecular weight: approximately 1800, in the general formula (II-1), $R^{211}$: 2,2-dimethyltrimethylene group and tetramethylene group, n211: approximately 23)
B-1: Polycaprolactone polyol (manufactured by Daicel Organic Synthesis Company, "PLACCEL 220" (trade name), number-average molecular weight: approximately 2000, in the general formula (III-1), $R^{311}$: pentamethylene group, n311: approximately 18)
B-2: Polyester polyol (manufactured by DIC Corporation, "OD-X-2692" (trade name), number-average molecular weight: approximately 2000, in the general formula (IV-1), $R^{411}$: tetramethylene group, $R^{421}$: isobutylene group, n411: approximately 10)
B-3: Polyester polyol (manufactured by Kuraray Co., Ltd., "P-2020" (trade name), number-average molecular weight: approximately 2000, in the general formula (IV-1), $R^{411}$: phenylene group, $R^{421}$: 3-methylpentamethylene group, n411: approximately 8)

[Synthesis Example 1] Production of polycarbonate diol P-1

A 1 L glass flask (hereinafter, also referred to as a "reactor") equipped with a rectifying column packed with a regular packing material, and a stirring apparatus was charged with 230 g of 1,5-pentanediol, 250 g of 1,6-hexanediol, and 400 g of ethylene carbonate. Then, 0.0468 g of titanium tetra-n-butoxide was placed therein as a catalyst. While the reactor was dipped in an oil bath of 180°C and a portion of the distillate was extracted, the mixture was reacted at a reaction temperature of 165°C for 12 hours. Subsequently, the reactor was connected directly to a condenser. The temperature of the oil bath was raised to 180°C. Then, the pressure was gradually lowered, and the reaction was further performed for 3 hours to obtain polycarbonate diol P-1 (466 g) which was liquid at ordinary temperature. The hydroxy value of the obtained polycarbonate diol P-1 was 55.2 mg-KOH/g. The number-average molecular weight of the obtained polycarbonate diol P-1 was 2033.

[Synthesis Example 2] Production of polycarbonate diol P-2

A 1 L glass flask (hereinafter, also referred to as a "reactor") equipped with a rectifying column packed with a regular packing material, and a stirring apparatus was charged with 270 g of 1,6-hexanediol, 250 g of 1,4-butanediol, and 445 g of ethylene carbonate. Then, 0.0960 g of titanium tetra-n-butoxide was placed therein as a catalyst. While the reactor was dipped in an oil bath of 140 to 160°C and a portion of the distillate was extracted, the mixture was reacted at a reaction temperature of 90 to 160°C for 20 hours. Subsequently, the reactor was connected directly to a condenser. The temperature of the oil bath was raised to 180°C. Then, the pressure was gradually lowered, and the reaction was further performed for 8 hours to obtain polycarbonate diol P-2 (462 g) which was liquid at ordinary temperature. The hydroxy value of the obtained polycarbonate diol P-2 was 56.1 mg-KOH/g. The number-average molecular weight of the obtained polycarbonate diol P-2 was 2000.

[Synthesis Example 3] Production of polycarbonate diol P-3

A 1 L glass flask (hereinafter, also referred to as a "reactor") equipped with a rectifying column packed with a regular packing material, and a stirring apparatus was charged with 230 g of 1,5-petanediol, 250 g of 1,6-hexanediol, and 400 g of ethylene carbonate. Then, 0.0468 g of titanium tetra-n-butoxide was placed therein as a catalyst. While the reactor was dipped in an oil bath of 180°C and a portion of the distillate was extracted, the mixture was reacted at a reaction temperature of 165°C for 12 hours. Subsequently, the reactor was connected directly to a condenser. The temperature of the oil bath was raised to 165°C. Then, the pressure was gradually lowered, and the reaction was further performed for 3 hours to obtain polycarbonate diol P-3 (478 g) which was liquid at ordinary temperature. The hydroxy value of the obtained polycarbonate diol P-3 was 112.0 mg-KOH/g. The number-average molecular weight of the obtained polycarbonate diol P-3 was 1002.

[Example 1] Production of polycarbonate diol composition SA-1

A 1 L glass flask (hereinafter, also referred to as a "reactor") equipped with a stirring apparatus was charged with 90 parts by mass (360 g) of the polycarbonate diol P-2 obtained in Synthesis Example 2, and 10 parts by mass (40 g) of polyoxytetramethylene glycol (manufactured by Mitsubishi Chemical Corp., "PTMG2000" (trade name), number-average molecular weight: approximately 2000). Subsequently, in the reactor, the pressure was reduced to 0.1 kPa.s or lower using a vacuum pump, and stirring was conducted at 120°C for 10 minutes. Thereafter, nitrogen substitution was conducted, and the oxygen concentration was confirmed to be 0.5% or lower. While the nitrogen flow rate was maintained at 1 L/min, the mixture was heated and stirred at an inside temperature of the reactor of approximately 145°C for 12 hours. The reaction solution was subjected to cloud point titration over time, and when it was confirmed that no change in the amount of cloud point titration had been observed, dibutyl phosphate was added in an amount of 1.3 times the mass ratio of titanium tetra-n-butoxide, and the mixture was heat-treated at 110°C in terms of the inside temperature of the reactor for 3 hours to obtain polycarbonate diol composition SA-1. Each physical property of the obtained polycarbonate diol composition SA-1 was measured by the method described above. The results are shown in Table 1. The hydroxy value of the obtained polycarbonate diol composition SA-1 was 56.6 mg-KOH/g. The number-average molecular weight of the obtained polycarbonate diol composition SA-1 was 1982.

The obtained polycarbonate diol composition SA-1 contained a repeating structural unit represented by the following formula (A1) and a repeating structural unit represented by the following formula (B1):

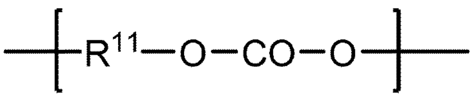

... (A2)

wherein $R^{11}$ is an aliphatic hydrocarbon group having 4 or 6 carbon atoms,

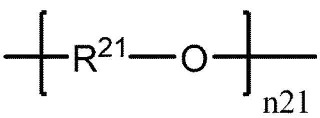

... (B1)

wherein $R^{21}$ is a tetramethylene group, and the average value of n21 is approximately 28.

[Examples 2 to 13]

Polycarbonate diol compositions SA-2 to SA-13 of Examples 2 to 13 were obtained through reaction using the same conditions and method as in Example 1 except that the type of each starting material and the amount of each starting material added were each changed as described in Tables 1 and 2. The amount titrated in the cloud point titration and each physical property of the obtained polycarbonate diol compositions SA-2 to SA-13 were measured by the method described above. The results are shown in Tables 1 and 2.

The obtained polycarbonate diol compositions SA-2 to SA-13 contained, in order, repeating structural units represented by the following formulas (A2) to (A13) and repeating structural units represented by the following formula (B2) to (B13):

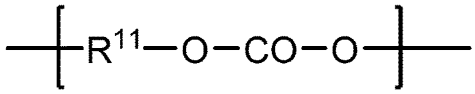 ... (A2)

wherein $R^{11}$ is an aliphatic hydrocarbon group having 5 or 6 carbon atoms,

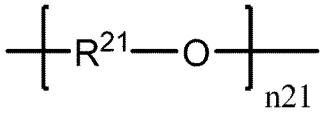 ... (B2)

wherein $R^{21}$ is a tetramethylene group, and the average value of n21 is approximately 28,

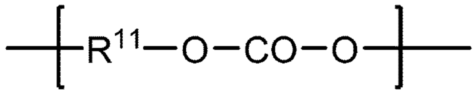 ... (A3)

wherein $R^{11}$ is an aliphatic hydrocarbon group having 4 or 6 carbon atoms,

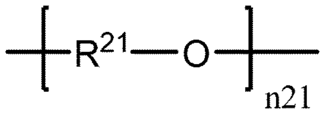 ... (B3)

wherein $R^{21}$ is an isopropylene group and a methylene group, and the average value of n21 is approximately 35,

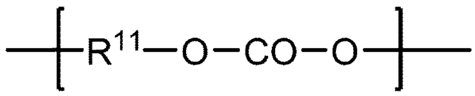 ... (A4)

wherein $R^{11}$ is an aliphatic hydrocarbon group having 5 or 6 carbon atoms,

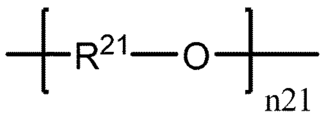 ... (B4)

wherein $R^{21}$ is a tetramethylene group, and the average value of n21 is approximately 28,

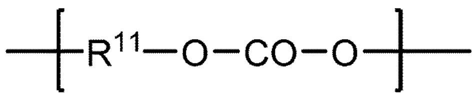 ... (A5)

wherein $R^{11}$ is an aliphatic hydrocarbon group having 5 or 6 carbon atoms,

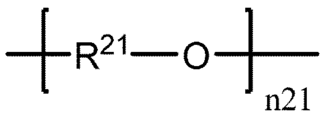 ... (B5)

wherein $R^{21}$ is a 2,2-dimethyltrimethylene group and a tetramethylene group, and the average value of n21 is approximately 23,

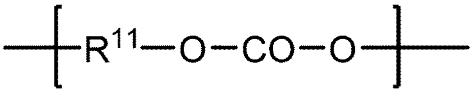

... (A6)

wherein $R^{11}$ is an aliphatic hydrocarbon group having 5 or 6 carbon atoms,

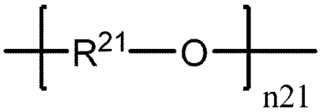

... (B6)

wherein $R^{21}$ is a 2,2-dimethyltrimethylene group and a tetramethylene group, and the average value of n21 is approximately 23,

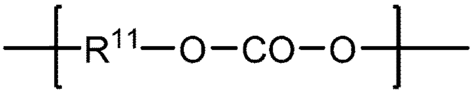

... (A7)

wherein $R^{11}$ is an aliphatic hydrocarbon group having 5 or 6 carbon atoms,

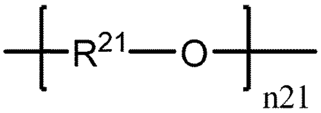

... (B7)

wherein $R^{21}$ is a tetramethylene group, and the average value of n21 is approximately 14,

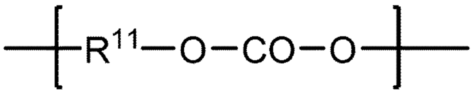

... (A8)

wherein $R^{11}$ is an aliphatic hydrocarbon group having 5 or 6 carbon atoms,

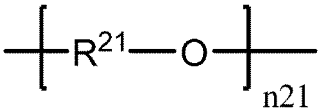

... (B8)

wherein $R^{21}$ is an isopropylene group and a methylene group, and the average value of n21 is approximately 44,

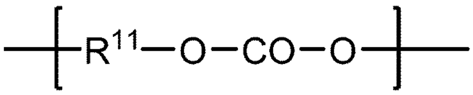

... (A9)

wherein $R^{11}$ is an aliphatic hydrocarbon group having 5 or 6 carbon atoms,

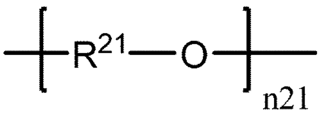

... (B9)

wherein $R^{21}$ is an isopropylene group and a methylene group, and the average value of n21 is approximately 35,

$$-\left[R^{11}-O-CO-O\right]- \quad \text{... (A10)}$$

wherein $R^{11}$ is an aliphatic hydrocarbon group having 4 or 6 carbon atoms,

$$-\left[R^{31}-O-CO\right]- \quad \text{... (B10)}$$

wherein $R^{31}$ is a pentamethylene group,

$$-\left[R^{11}-O-CO-O\right]- \quad \text{... (A11)}$$

wherein $R^{11}$ is an aliphatic hydrocarbon group having 5 or 6 carbon atoms,

$$-\left[CO-R^{41}-CO-O-R^{42}-O\right]- \quad \text{... (B11)}$$

wherein $R^{41}$ is a tetramethylene group, and $R^{42}$ is an isobutylene group,

$$-\left[R^{11}-O-CO-O\right]- \quad \text{... (A12)}$$

wherein $R^{11}$ is an aliphatic hydrocarbon group having 5 or 6 carbon atoms,

$$-\left[CO-R^{41}-CO-O-R^{42}-O\right]- \quad \text{... (B12)}$$

wherein $R^{41}$ is a phenylene group, and $R^{42}$ is a 3-methylpentamethylene group,

$$-\left[R^{11}-O-CO-O\right]- \quad \text{... (A13)}$$

wherein $R^{11}$ is an aliphatic hydrocarbon group having 4 or 6 carbon atoms, and

$$-\left[R^{21}-O\right]_{n21}- \quad \text{... (B13)}$$

wherein $R^{21}$ is an isopropylene group and a methylene group, and the average value of n21 is approximately 35.

[Comparative Example 1] Production of polycarbonate diol composition SB-1

A 1 L glass flask (hereinafter, also referred to as a "reactor") equipped with a stirring apparatus was charged with 25 parts by mass (100 g) of the polycarbonate diol P-1 obtained in Synthesis Example 1, and 75 parts by mass (300 g) of polyoxytetramethylene glycol (manufactured by Mitsubishi Chemical Corp., "PTMG2000" (trade name), number-average molecular weight: approximately 2000). Under an air atmosphere, the inside temperature of the reactor was heated to approximately 145°C and maintained with stirring for 10 hours. Subsequently, dibutyl phosphate was added in an amount of 1.3 times the mass ratio of titanium tetra-n-butoxide, and the mixture was heat-treated at 110°C in terms of the inside temperature of the reactor for 3 hours to obtain polycarbonate diol composition SB-1. Each physical property of the obtained polycarbonate diol composition SB-1 was measured by the method described above. The results are shown in Table 3. The hydroxy value of the obtained polycarbonate diol composition SB-1 was 56.2 mg-KOH/g, and the number-average molecular weight was 1996.

[Comparative Example 2] Production of polycarbonate diol composition SB-2

Polycarbonate diol composition SB-2 of Comparative Example 2 was obtained through reaction using the same conditions and method as in Comparative Example 1 except that the type of each starting material and the amount of each starting material added were each changed as described in Table 2. Each physical property of the obtained polycarbonate diol composition SB-2 was measured by the method described above. The results are shown in Table 3.

[Comparative Example 3] Production of polycarbonate diol composition SB-3

A 1 L glass flask (hereinafter, also referred to as a "reactor") equipped with a stirring apparatus was charged with 400 g of polycarbonate diol P-2 obtained in Synthesis Example 2 and dibutyl phosphate in an amount of 1.3 times the mass ratio of titanium tetra-n-butoxide, and the mixture was heat-treated at 110°C in terms of the inside temperature of the reactor for 3 hours to obtain polycarbonate diol composition SB-3. Each physical property of the obtained polycarbonate diol composition SB-3 was measured by the method described above. The results are shown in Table 3. The hydroxy value of the obtained polycarbonate diol composition SB-3 was 56.1 mg-KOH/g, and the number-average molecular weight was 2000.

[Comparative Example 4] Production of polycarbonate diol composition SB-4

A 1 L glass flask (hereinafter, also referred to as a "reactor") equipped with a stirring apparatus was charged with 90 parts by mass (360 g) of polycarbonate diol P-2 obtained in Synthesis Example 2, and 10 parts by mass (40 g) of polyoxytetramethylene glycol (manufactured by Mitsubishi Chemical Corp., "PTMG2000" (trade name), number-average molecular weight: approximately 2000). Subsequently, in the reactor, the pressure was reduced to 0.1 kPa.s or lower using a vacuum pump, and stirring was conducted at 120°C for 10 minutes. Thereafter, nitrogen substitution was conducted, and the oxygen concentration was confirmed to be 0.5% or lower. While the nitrogen flow rate was maintained at 1 L/min, the mixture was heated and stirred at an inside temperature of the reactor of approximately 145°C for 6 hours. The reaction solution was subjected to GPC measurement over time, the disappearance of peaks derived from the starting materials and the appearance of a peak derived from a product were confirmed over time, and the progression of the reaction was confirmed. Thereafter, dibutyl phosphate was added in an amount of 1.3 times the mass ratio of titanium tetra-n-butoxide, and the mixture was heat-treated at 110°C in terms of the inside temperature of the reactor for 3 hours to obtain polycarbonate diol composition SB-4. Each physical property of the obtained polycarbonate diol composition SB-4 was measured by the method described above. The results are shown in Table 3. The hydroxy value of the obtained polycarbonate diol composition SB-4 was 56.2 mg-KOH/g. The number-average molecular weight of the obtained polycarbonate diol composition SB-4 was 1996.

[Table 1]

| | Example 1 | Example 2 | Example 3 | Example 4 | Example 5 | Example 6 |
|---|---|---|---|---|---|---|
| Polycarbonate diol composition | SA-1 | SA-2 | SA-3 | SA-4 | SA-5 | SA-6 |
| Polycarbonate diol (I-1) | P-2 | P-1 | P-2 | P-1 | P-1 | P-1 |

(continued)

| Polyether diol (II-1) | | A-1 | A-1 | A-3 | A-3 | A-5 | A-5 |
|---|---|---|---|---|---|---|---|
| Polycaprolactone diol (III-1) | | | | | | | |
| Polyester diol (IV-1) | | | | | | | |
| Amount added (I-1) [g] | | 360 | 280 | 280 | 240 | 320 | 280 |
| Amount added (II-1 to IV-1) [g] | | 40 | 120 | 120 | 160 | 80 | 120 |
| Structural unit (I) content [% by mass] | | 90% | 70% | 70% | 60% | 80% | 70% |
| Structural unit (II) content [% by mass] | | 10% | 30% | 30% | 40% | 20% | 30% |
| Structural unit (III) content [% by mass] | | | | | | | |
| Structural unit (IV) content [% by mass] | | | | | | | |
| Hydroxyl value [mg-KOH/g] | | 56.6 | 55.9 | 56.2 | 56.4 | 57.5 | 57.9 |
| APHA | | 20 | 30 | 10 | 20 | 10 | 10 |
| Acid value [mg-KOH/g] | | 0.05 | 0.06 | 0.03 | 0.04 | 0.05 | 0.06 |
| POV | | ○ | ○ | ○ | ○ | ○ | ○ |
| Cloud point titration [mL] | | 4.3 | 5.7 | 5.8 | 6.3 | 6.6 | 6.8 |
| xy/α | | 3.9 | 4.0 | 4.1 | 3.8 | 5.3 | 4.7 |
| Compatibility | Teslac 2460 | ○ | ○ | ○ | ○ | ○ | ○ |
| | MIBK | ○ | ○ | ○ | ○ | ○ | ○ |
| Stability of quality | | ○ | ○ | ○ | ○ | ○ | ○ |

[Table 2]

| | | Example 7 | Example 8 | Example 9 | Example 10 | Example 11 | Example 12 | Example 13 |
|---|---|---|---|---|---|---|---|---|
| Polycarbonate diol composition | | SA-7 | SA-8 | SA-9 | SA-10 | SA-11 | SA-12 | SA-13 |
| Polycarbonate diol (I-1) | | P-3 | P-3 | P-3 | P-2 | P-1 | P-1 | P-2 |
| Polyether diol (II-1) | | A-2 | A-4 | A-3 | | | | A-3 |
| Polycaprolactone diol (III-1) | | | | | B-1 | | | |
| Polyester diol (IV-1) | | | | | | B-2 | B-3 | |
| Amount added (I-1) [g] | | 200 | 320 | 280 | 280 | 200 | 220 | 180 |
| Amount added (II-1 to IV-1) [g] | | 200 | 80 | 120 | 120 | 200 | 180 | 220 |
| Structural unit (I) content [% by mass] | | 50% | 80% | 70% | 70% | 50% | 55% | 45% |
| Structural unit (II) content [% by mass] | | 50% | 20% | 30% | | | | 55% |
| Structural unit (III) content [% by mass] | | | | | 30% | | | |
| Structural unit (IV) content [% by mass] | | | | | | 50% | 45% | |
| Hydroxyl value [mg-KOH/g] | | 103.1 | 98.9 | 96.1 | 56.5 | 56.1 | 56.1 | 57 |
| APHA | | 40 | 20 | 20 | 30 | 20 | 30 | 20 |
| Acid value [mg-KOH/g] | | 0.1 | 0.08 | 0.05 | 0.12 | 0.13 | 0.24 | 0.15 |
| POV | | ○ | ○ | ○ | ○ | ○ | ○ | ○ |
| Cloud point titration [mL] | | 9.3 | 8.2 | 8.5 | 6.8 | 7.4 | 7.4 | 8.4 |
| xy/α | | 3.7 | 5.2 | 4.8 | 4.8 | 3.7 | 4.1 | 3.8 |
| Compatibility | Teslac 2460 | ○ | ○ | ○ | ○ | ○ | ○ | ○ |
| | MIBK | ○ | ○ | ○ | ○ | ○ | Δ | ○ |
| Stability of quality | | ○ | ○ | ○ | ○ | ○ | ○ | ○ |

[Table 3]

| | | Comparative Example 1 | Comparative Example 2 | Comparative Example 3 | Comparative Example 4 |
|---|---|---|---|---|---|
| Polycarbonate diol composition | | SB-1 | SB-2 | SB-3 | SB-4 |
| Polycarbonate diol (I-1) | | P-1 | P-2 | P-2 | P-2 |
| Polyether diol (II-1) | | A-1 | | | A-1 |
| Polycaprolactone diol (III-1) | | | B-1 | | |
| Polyester diol (IV-1) | | | | | |
| Amount added (I-1) [g] | | 100 | 80 | 400 | 360 |
| Amount added (II-1 to IV-1) [g] | | 300 | 320 | 0 | 40 |
| Structural unit (I) content [% by mass] | | 25% | 20% | 100% | 90% |
| Structural unit (II) content [% by mass] | | 75% | | | 10% |
| Structural unit (III) content [% by mass] | | | 80% | | |
| Structural unit (IV) content [% by mass] | | | | | |
| Hydroxyl value [mg-KOH/g] | | 56.2 | 56.1 | 56.1 | 56.2 |
| APHA | | 100 | 80 | 10 | 30 |
| Acid value [mg-KOH/g] | | 0.86 | 0.5 | 0.08 | 0.09 |
| POV | | Δ | Δ | ○ | ○ |
| Cloud point titration [mL] | | 8.6 | 9 | 3.7 | 3.9 |
| xy/$\alpha$ | | 2.2 | 1.8 | 3.7 | 3.5 |
| Compatibility | Teslac 2460 | ○ | Δ | ○ | Δ |
| | MIBK | Δ | Δ | × | ○ |
| Stability of quality | | × | × | ○ | × |

[Application Example 1] Synthesis of polyurethane film PA-1

In a 500 mL separable flask in which a thermocouple and a condenser were installed, 38 g of polycarbonate diol composition SA-1, 224 g of dimethylformamide (hereinafter, also abbreviated to DMF), and 0.26 g of a 1% solution of dibutyltin dilaurate in toluene (50 ppm based on the total mass of MDI and the polycarbonate diol composition) were placed, and warmed in an oil bath of 40°C. While the solution in the flask was stirred at 100 rpm under a nitrogen atmosphere in the flask, 14.8 g of MDI (3.09 times [mol] based on OH [mol] of the polycarbonate diol composition) was added dropwise thereto. The solution in the flask was further stirred for approximately 1.5 hours. The consumption of a theoretical amount was confirmed by the analysis of an isocyanate group concentration to obtain a prepolymer. Subsequently, a necessary amount (3.2 g) of 1,4-butanediol (1,4-BD) calculated from residual isocyanate was added in divided portions into the flask. The solution in the flask was stirred for approximately 1 hour. Then, approximately 1 g of ethanol was added thereto, and the solution in the flask was further stirred for 30 minutes to obtain a solution of polyurethane having a number-average molecular weight of 74000.

The obtained polyurethane was added dropwise to the upper part of a glass plate (JIS R3202, 2 mm × 100 mm × 150 mm), which was then coated using a 0.8 mm thick applicator such that a dry film thickness was 50 to 150 μm. The coating was dried for 2 hours on a hot plate having a surface temperature of 60°C and subsequently for 12 hours in an oven of 80°C. The coating was further left standing under constant temperature and humidity conditions of 23°C and 55% RH for 12 hours or longer to obtain polyurethane film PA-1. The obtained polyurethane film PA-1 was subjected to the evaluation of each physical property by the method described above. The evaluation results are shown in Table 4.

[Application Examples 2 to 13]

Polyurethane films PA-2 to PA-13 were obtained through reaction under the same conditions as in Application Example 1 except that in the production of the polyurethane film of Application Example 1, the polycarbonate diol composition used was changed to the polycarbonate diol compositions SA-2 to SA-13 produced in Examples 2 to 12. The obtained polyurethane films PA-2 to PA-13 were subjected to the evaluation of each physical property by the method described above. The evaluation results are shown in Tables 4 and 5.

[Application Comparative Examples 1 to 4]

Polyurethane films PB-1 to PB-4 were obtained through reaction under the same conditions as in Application Example 1 except that in the production of the polyurethane film of Application Example 1, the polycarbonate diol composition, etc. used was changed to the polycarbonate diol compositions, etc. SB-1 to SB-4 produced in Comparative Examples 1 to 3. The obtained polyurethane films PB-1 to PB-4 were subjected to the evaluation of each physical property by the method described above. The evaluation results are shown in Table 6.

[Table 4]

| | Application Example 1 | Application Example 2 | Application Example 3 | Application Example 4 | Application Example 5 | Application Example 6 |
|---|---|---|---|---|---|---|
| Polyurethane film | PA-1 | PA-2 | PA-3 | PA-4 | PA-5 | PA-6 |
| Number-average molecular weight Mn | 74000 | 68000 | 68000 | 71000 | 81000 | 79000 |
| Mw/Mn | 3.3 | 3.4 | 3.3 | 3.6 | 3.5 | 3.2 |
| ΔM{M1(-20°C)-M2(23°C)} | 18.2 | 10.8 | 10.2 | 9.9 | 9.7 | 9.9 |
| M2(23°C)[MPa] | 4.9 | 4.5 | 3.2 | 2.9 | 3.8 | 3.2 |
| M1(-20°C)[MPa] | 23.1 | 15.3 | 13.4 | 12.8 | 13.5 | 13.1 |
| Moist heat resistance test-retention [%] | 77.9 | 55.1 | 60.7 | 57.5 | 62.5 | 60.5 |
| ΔAPHA of polyurethane solution | 20 | 10 | 10 | 10 | 10 | 10 |

[Table 5]

| | Application Example 7 | Application Example 8 | Application Example 9 | Application Example 10 | Application Example 11 | Application Example 12 | Application Example 13 |
|---|---|---|---|---|---|---|---|
| Polyurethane film | PA-7 | PA-8 | PA-9 | PA-10 | PA-11 | PA-12 | PA-13 |
| Number-average molecular weight Mn | 66000 | 69000 | 78000 | 72000 | 75000 | 65000 | 67000 |
| Mw/Mn | 3.3 | 3.5 | 3.4 | 4.1 | 4.3 | 4.4 | 3.6 |
| ΔM{M1(-20°C)-M2 (23°C)} | 17.1 | 10.1 | 10.3 | 13.3 | 12.9 | 19.2 | 8.4 |
| M2(23°C)[MPa] | 5.5 | 3.6 | 2.9 | 4.1 | 3.9 | 4.2 | 2.7 |
| M1(-20°C)[MPa] | 22.6 | 13.7 | 13.2 | 17.4 | 16.8 | 23.4 | 11.1 |
| Moist heat resistance test-retention [%] | 75.3 | 61.2 | 57.2 | 54.2 | 51.6 | 48.8 | 43.6 |
| ΔAPHA of polyurethane solution | 20 | 10 | 20 | 20 | 30 | 30 | 30 |

[Table 6]

| | Application Comparative Example 1 | Application Comparative Example 2 | Application Comparative Example 3 | Application Comparative Example 4 |
|---|---|---|---|---|
| Polyurethane film | PB-1 | PB-2 | PB-3 | PB-4 |
| Number-average molecular weight Mn | 69000 | 59000 | 85000 | 67000 |
| Mw/Mn | 3.7 | 3.8 | 3.5 | 3.8 |
| ΔM{M1(-20°C)-M2 (23°C)} | 4.9 | 4.8 | 22.3 | 19.4 |
| M2(23°C)[MPa] | 4.3 | 3.8 | 5.7 | 4.8 |
| M1(-20°C)[MPa] | 9.2 | 8.6 | 28.1 | 24.2 |
| Moist heat resistance test - retention [%] | 38.1 | 30.5 | 92.1 | 76.6 |
| ΔAPHA of polyurethane solution | 100 | 60 | 10 | 40 |

From the results shown in Tables 1 to 3, the polycarbonate diol compositions comprising the repeating structural unit (I), further comprising at least one repeating structural unit selected from the group consisting of the repeating structural units (II) to (IV), and satisfying specific conditions were found to be more excellent in compatibility with polyols and solvents than polycarbonate diol compositions not satisfying the specific conditions. Controlling the acid value and/or the peroxide value of the polycarbonate diol compositions was found to enable the APHA to be further lower and coloring to be further reduced.

From the results shown in Tables 4 to 6, the polyurethanes obtained from the polycarbonate diol compositions of Examples were found to be excellent in flexibility and mechanical properties at low temperatures and also excellent in a balance with durability such as moist heat resistance. The change over time of the APHA of polyurethane solutions obtained from the polycarbonate diol compositions of Examples was also confirmed to be good.

The present application is based on Japanese Patent Application No. 2021-072116 filed on April 21, 2021, the contents of which are incorporated herein by reference.

Industrial Applicability

The polycarbonate diol composition of the present embodiment is capable of producing, for example, high-solid coating materials or polyurethane, and is useful as a starting material of coating materials or polycarbonate-based polyurethane. Polyurethane produced using the polycarbonate diol composition of the present embodiment has stability of color tone, has characteristics excellent in low-temperature flexibility and durability, and can be suitably used in a wide range of fields such as elastic fibers, synthetic or artificial leather, coating materials, and high-performance elastomers.

## Claims

1. A polycarbonate diol composition comprising a repeating structural unit represented by the following general formula (I), further comprising at least one repeating structural unit selected from the group consisting of a repeating structural unit represented by the following general formula (II), a repeating structural unit represented by the following general formula (III), and a repeating structural unit represented by the following general formula (IV), and satisfying the following expression (Expression 1):

$$-\left[R^{11}-O-CO-O\right]- \qquad \ldots (I)$$

wherein $R^{11}$ is a divalent linear, branched or cyclic aliphatic, or aromatic hydrocarbon group having 2 or more and 15 or less carbon atoms, the hydrocarbon group optionally having a hetero atom, and $R^{11}$ when present in plural are the same as or different from each other,

$$-\left[R^{21}-O\right]_{n21}- \quad \text{... (II)}$$

wherein $R^{21}$ is a divalent linear, branched or cyclic aliphatic, or aromatic hydrocarbon group having 2 or more and 20 or less carbon atoms, and $R^{21}$ when present in plural are the same as or different from each other; and n21 is any integer,

$$-\left[R^{31}-O-CO\right]- \quad \text{... (III)}$$

wherein $R^{31}$ is a divalent linear, branched or cyclic aliphatic, or aromatic hydrocarbon group having 2 or more and 20 or less carbon atoms, and $R^{31}$ when present in plural are the same as or different from each other,

$$-\left[CO-R^{41}-CO-O-R^{42}-O\right]- \quad \text{... (IV)}$$

wherein $R^{41}$ and $R^{42}$ are each independently a divalent linear, branched or cyclic aliphatic, or aromatic hydrocarbon group having 2 or more and 20 or less carbon atoms, and $R^{41}$ and $R^{42}$ when present in plural are the same as or different from each other,

$$xy \geq 3.7 \times \alpha \ (\alpha = 22.4 \times Mn^{-0.41}) \ \text{... (Expression 1)}$$

wherein x is a proportion of the content (% by mass) of the repeating structural unit represented by the general formula (I) based on the total mass (% by mass) of the repeating structural units represented by the general formulas (I) to (IV), y is an amount of the polycarbonate diol composition titrated (mL) in a cloud point titration method, and Mn is a number-average molecular weight of the polycarbonate diol composition.

**2.** A polycarbonate diol composition comprising a repeating structural unit represented by the following general formula (I) and further comprising at least one repeating structural unit selected from the group consisting of a repeating structural unit represented by the following general formula (II), a repeating structural unit represented by the following general formula (III), and a repeating structural unit represented by the following general formula (IV), wherein based on the total mass of the repeating structural units represented by the general formulas (I) to (IV), a content of the repeating structural unit represented by the general formula (I) is 40% by mass or more, and an amount titrated in a cloud point titration method is 4.0 mL or more and 9.5 mL or less:

$$-\left[R^{11}-O-CO-O\right]- \quad \text{... (I)}$$

wherein $R^{11}$ is a divalent linear, branched or cyclic aliphatic, or aromatic hydrocarbon group having 2 or more and 15 or less carbon atoms, the hydrocarbon group optionally having a hetero atom, and $R^{11}$ when present in plural are the same as or different from each other,

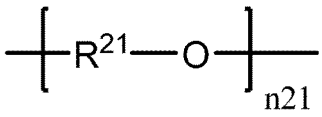

... (II)

wherein $R^{21}$ is a divalent linear, branched or cyclic aliphatic, or aromatic hydrocarbon group having 2 or more and 20 or less carbon atoms, and $R^{21}$ when present in plural are the same as or different from each other; and n21 is any integer,

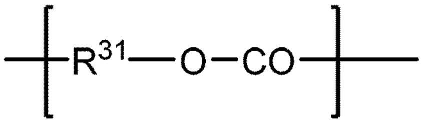

... (III)

wherein $R^{31}$ is a divalent linear, branched or cyclic aliphatic, or aromatic hydrocarbon group having 2 or more and 20 or less carbon atoms, and $R^{31}$ when present in plural are the same as or different from each other,

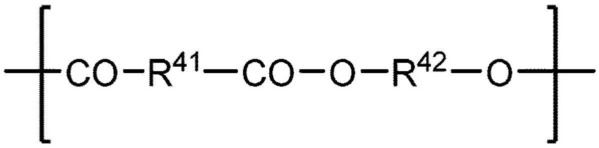

... (IV)

wherein $R^{41}$ and $R^{42}$ are each independently a divalent linear, branched or cyclic aliphatic, or aromatic hydrocarbon group having 2 or more and 20 or less carbon atoms, and $R^{41}$ and $R^{42}$ when present in plural are the same as or different from each other.

**3.** The polycarbonate diol composition according to claim 1, wherein based on the total mass of the repeating structural units represented by the general formulas (I) to (IV), a content of the repeating structural unit represented by the general formula (I) is 5% by mass or more and 95% by mass or less.

**4.** The polycarbonate diol composition according to any one of claims 1 to 3, wherein based on the total mass of the repeating structural units represented by the general formulas (I) to (IV), a content of the repeating structural unit represented by the general formula (I) is 40% by mass or more and 90% by mass or less.

**5.** The polycarbonate diol composition according to any one of claims 1 to 4, wherein an acid value is 0.001 mg-KOH/g or more and 0.8 mg-KOH/g or less.

**6.** The polycarbonate diol composition according to any one of claims 1 to 5, wherein a peroxide content is 10 meq/kg or less.

**7.** The polycarbonate diol composition according to any one of claims 1 to 6, wherein a Hazen color number value (APHA value) in accordance with JIS K0071-1 (2017) is 100 or less.

**8.** The polycarbonate diol composition according to any one of claims 1 to 7, wherein among the repeating structural units represented by the general formulas (II) to (IV), an average value of the number of repeats of the repeating structural unit represented by the general formula (II), represented by n21, is 15 or larger.

**9.** The polycarbonate diol composition according to any one of claims 1 to 8, comprising at least a repeating structural unit represented by the general formula (II) or (IV) among the repeating structural unis represented by the general formulas (II) to (IV).

**10.** The polycarbonate diol composition according to any of claims 1 to 9, comprising at least a repeating structural unit represented by the general formula (II) among the repeating structural unis represented by the general formulas (II) to (IV).

**11.** A polyurethane prepared using the polycarbonate diol composition according to any one of claims 1 to 10.

**12.** The polyurethane according to claim 11, wherein, with respect to a stress at 100% stretch according to a tensile test of the polyurethane, ΔM calculated by the following expression (B) is 1.0 or more and 19.0 or less:

$$\Delta M = M1 - M2 \quad ... \quad (B)$$

wherein M1 represents a stress at 100% stretch in a tensile test under a -20°C condition, and M2 represents a stress at 100% stretch in a tensile test under a 23°C condition.

**13.** A synthetic leather comprising the polyurethane according to claim 11 or 12.

## INTERNATIONAL SEARCH REPORT

International application No. **PCT/JP2022/018339**

**A. CLASSIFICATION OF SUBJECT MATTER**

***C08G 64/00***(2006.01)i; ***D06N 3/14***(2006.01)i; ***C08G 18/44***(2006.01)i; ***C08G 63/64***(2006.01)i
FI: C08G64/00; C08G18/44; C08G63/64; D06N3/14 101

According to International Patent Classification (IPC) or to both national classification and IPC

**B. FIELDS SEARCHED**

Minimum documentation searched (classification system followed by classification symbols)

C08G64/00-64/42; C08G18/44-18/46; C08G63/64

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | WO 2014/069563 A1 (UBE INDUSTRIES, LTD.) 08 May 2014 (2014-05-08) | 1-13 |
| A | JP 2016-113528 A (UBE INDUSTRIES, LTD.) 23 June 2016 (2016-06-23) | 1-13 |
| A | JP 2016-191075 A (UBE INDUSTRIES, LTD.) 10 November 2016 (2016-11-10) | 1-13 |
| A | US 2020/0339746 A1 (J & A TECHNOLOGY CORP.) 29 October 2020 (2020-10-29) | 1-13 |
| A | CN 102002142 A (NINGBO INSTITUTE OFMATERIAL TECHNOLOGY AND ENGINEERING, CHINESE ACADEMY OF SCIENCES) 06 April 2011 (2011-04-06) | 1-13 |
| A | WO 2020/125577 A1 (SHANDONG INOV POLYURETHANE CO., LTD.) 25 June 2020 (2020-06-25) | 1-13 |
| A | WO 2013/095289 A1 (ST. JUDE MEDICAL SYSTEMS AB) 27 June 2013 (2013-06-27) | 1-13 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 June 2022** | **05 July 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/018339**

| Patent document cited in search report | Publication date (day/month/year) | Patent family member(s) | Publication date (day/month/year) |
|---|---|---|---|
| WO 2014/069563 A1 | 08 May 2014 | TW 201422665 A | |
| JP 2016-113528 A | 23 June 2016 | (Family: none) | |
| JP 2016-191075 A | 10 November 2016 | (Family: none) | |
| US 2020/0339746 A1 | 29 October 2020 | TW 202039624 A | |
| CN 102002142 A | 06 April 2011 | (Family: none) | |
| WO 2020/125577 A1 | 25 June 2020 | CN 109694494 A | |
| WO 2013/095289 A1 | 27 June 2013 | US 2014/0350137 A1<br>SE 1151240 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3252420 A
- JP 2019151813 A
- WO 2019131617 A
- JP 3874664 B
- JP 2021072116 A


### Non-patent literature cited in the description


- Case Studies of Polyurethane Material Selection, Structure Control and Modification. Technical Information Institute Co., Ltd, December 2014, 51-62